(19) **Europäisches Patentamt**

**European Patent Office**

**Office européen des brevets**

(11) **EP 1 727 344 A2**

(12) **EUROPEAN PATENT APPLICATION**

(43) Date of publication:
**29.11.2006 Bulletin 2006/48**

(51) Int Cl.:
*H04M 9/08* (2006.01)

(21) Application number: **06007407.7**

(22) Date of filing: **07.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Chen, Juin-Hwey**<br>  **Irvine**<br>  **California 92618-7013 (US)**<br>• **Bennett, James, D.**<br>  **36001 Karlovy Vary (CZ)** |
| (30) Priority: **24.05.2005 US 135491**<br>**31.08.2005 US 215304**<br>**30.09.2005 US 239351** | (74) Representative: **Jehle, Volker Armin**<br>**Patentanwälte**<br>**Bosch, Graf von Stosch, Jehle,**<br>**Flüggenstrasse 13**<br>**80639 München (DE)** |
| (71) Applicant: **Broadcom Corporation**<br>**Irvine, CA 92618-7013 (US)** | |

(54) **Improved echo cancellation in telephones with multiple microphones**

(57) The present invention is directed to a telephone equipped with multiple microphones that provides improved performance during operation of the telephone in a speaker-phone mode. For example, the multiple microphones can be used to improve voice activity detection, which in turn, can improve echo cancellation. In addition, the multiple microphones can be configured as an adaptive microphone array and used to reduce the effects of (i) room reverberation, when a near-end user is speaking, and/or (ii) acoustic echo, when a far-end user is speaking.

FIG.4

**Description**

CROSS REFERENCE TO RELATED APPLICATIONS

This application is a continuation-in-part of U.S. Patent Application No. 11/215,304 to Chen et al., entitled "Wireless Telephone with Multiple Microphones and Multiple Description Transmission" and filed August 31, 2005, which is a continuation-in-part of U.S. Patent Application No. 11/135,491 to Chen, entitled "Wireless Telephone with Adaptive Microphone Array" and filed May 24, 2005, which is a continuation-in-part of U.S. Patent Application No. 11/065,131 to Chen, entitled "Wireless Telephone With Uni-Directional and Omni-Directional Microphones" and filed February 24, 2005, which is a continuation-in-part of U.S. Patent Application No. 11/018,921 to Chen et al., entitled "Wireless Telephone Having Multiple Microphones" and filed December 22, 2004. The entirety of each of these applications is hereby incorporated by reference as if fully set forth herein.

Background

Field

The present invention relates generally to telephones. More specifically, the present invention relates to improving the performance of telephones when used in a speaker-phone mode.

Background

Many telephones may be used in a speaker-phone mode. However, using a telephone in a speaker-phone mode may lead to adverse effects that degrade the performance of the telephone. These adverse effects may depend on who is talking—i.e., whether the user of a far-end telephone is talking or the user of a near-end telephone is talking.
For a near-end telephone used in speaker-phone mode, acoustic echo may be an issue when a far-end user is talking. An "acoustic echo" can occur, for example, when the voice signal of a far-end user output by the loudspeaker of the near-end telephone is picked up by the microphone on the near-end telephone. When this occurs, an acoustic echo is sent back to the far-end user via the near-end telephone.
For a near-end telephone used in speaker-phone mode, room reverberation may be an issue when a near-end user is talking. The "room reverberation" effect occurs when a near-end user's voice reflects off the walls of a room. The reflection of the near-end user's voice can then be picked-up by the microphone on the near-end telephone. The reflected sound waves picked-up by the near-end telephone make the near-end user's voice sound distant and unnatural to a far-end user.
What is needed then, are improvements to control acoustic echo and/or room reverberation when a telephone is used in a speaker phone mode.

Brief Summary

The present invention is directed to a telephone equipped with multiple microphones that provides improved performance during operation of the telephone in a speaker-phone mode.
In a first embodiment of the present invention, the telephone includes a receiver, a loudspeaker, a first and second microphone, a voice activity detector (VAD), an echo canceller, and a transmitter. The first and second microphones are used to improve voice activity detection, which in turn, can improve echo cancellation. For example, the receiver receives a far-end audio signal including a voice component of a far-end user. The loudspeaker converts the far-end audio signal into sound waves. The first microphone picks up the sound waves and outputs a first audio signal. The first audio signal includes a first voice component associated with the voice of a near-end user and a second voice component associated with the voice of the far-end user. The second microphone outputs a second audio signal. The VAD processes the first audio signal, the second audio signal and the far-end audio signal to generate output relating to at least one of (i) time intervals in which the first voice component is present in the first audio signal and (ii) time intervals in which the second voice component is present in the first audio signal. The echo canceller cancels the second voice component included in the first audio signal based on the output from the VAD, thereby producing a third audio signal. The transmitter transmits the third audio signal.
In a second embodiment of the present invention, the telephone includes an array of microphones and a digital signal processor (DSP). Each microphone in the microphone array is configured to receive sound waves emanating from the surrounding environment and to generate an audio signal corresponding thereto. The DSP receives the audio signals from the microphone array and is configured to adaptively combine the audio signals to produce a first audio output signal. In this embodiment, the microphone array and DSP are configured to reduce the adverse effects of (i) room reverberation, when a near-end user is speaking, and/or (ii) acoustic echo, when a far-end user is speaking.

To reduce room reverberation in accordance with a first example, the DSP is configured to detect a direction of arrival (DOA) of sound waves emanating from the mouth of a near-end user based on the audio signals and to adaptively combine the audio signals based on the DOA to produce the first audio output signal. The DSP adaptively combines the audio signals based on the DOA to effectively steer a maximum sensitivity angle of the microphone array so that the mouth of the near-end user is within the maximum sensitivity angle. The maximum sensitivity angle is defined as an angle within which a sensitivity of the microphone array is above a threshold. This first example can be effective at reducing room reverberation when the reverberated sound waves are reflected from objects in the surrounding environment in a substantially isotropic manner.

To reduce room reverberation in accordance with a second example, the DSP is configured to detect a direction of arrival (DOA) of sound waves corresponding to a reverberation of a voice of a near-end user and to adaptively combine the audio signals based on the DOA to produce the first audio output signal. The DSP combines the audio signals based on the DOA to effectively steer a minimum sensitivity angle of the microphone array so that a source of the reverberation of the voice of the near-end user is within the minimum sensitivity angle. The minimum sensitivity angle is defined as an angle within which a sensitivity of the microphone array is below a threshold. This second example can effectively reduce room reverberation when the reverberated sound waves are reflected from objects in the surrounding environment in a highly directional manner.

To reduce acoustic echo when a far-end user is speaking, the DSP is configured to perform two functions. First, the DSP is configured to detect a DOA of sound waves corresponding to the voice signal (echo) of the far-end user. Second, the DSP is configured to adaptively combine the audio signals based on the DOA to effectively steer a minimum sensitivity angle of the microphone array so that a source of the sound waves corresponding to the far-end user's voice is within the minimum sensitivity angle. The source of these sound waves can be, for example, a loudspeaker of the telephone or an object that reflects sound waves (e.g., a wall or the like). The minimum sensitivity angle is defined as an angle within which a sensitivity of the microphone array is below a threshold.

According to an aspect of the invention, a telephone is provided that provides improved echo cancellation performance, comprising:

a receiver that receives a far-end audio signal comprising a voice component of a far-end user;

a loudspeaker that converts the far-end audio signal into sound waves;

a first microphone that picks up the sound waves and outputs a first audio signal, the first audio signal including a first voice component associated with the voice of a near-end user and a second voice component associated with the voice of the far-end user;

a second microphone that outputs a second audio signal;

a voice activity detector (VAD) that processes the first audio signal, the second audio signal and the far-end audio signal to generate output relating to at least one of (i) time intervals in which the first voice component is present in the first audio signal and (ii) time intervals in which the second voice component is present in the first audio signal; and

an echo canceller that cancels the second voice component included in the first audio signal based on the output from the VAD, thereby producing a third audio signal.

Advantageously, the VAD processes the first audio signal, the second audio signal and the far-end audio signal to generate output relating to time intervals in which the first voice component is present in the first audio signal, wherein the processing of the first and second audio signals is based in part on detecting a power ratio between the first and second audio signals.

Advantageously, the echo canceller comprises:

an adaptive filter that adaptively filters the far-end audio signal based on the output from the VAD to produce an adaptively filtered signal; and

a subtraction unit that subtracts the adaptively filtered signal from the first audio signal, thereby producing the third audio signal.

Advantageously, the echo canceller comprises:

an adaptive filter that adaptively filters the second audio signal based on the output from the VAD to produce an adaptively filtered signal; and

a subtraction unit that subtracts the adaptively filtered signal from the first audio signal, thereby producing the third audio signal.

Advantageously, the echo canceller comprises:

an adaptive filter that (i) adaptively filters the far-end audio signal based on the output from the VAD to produce a first adaptively filtered signal, (ii) adaptively filters the second audio signal based on the output from the VAD to produce a second adaptively filtered signal, and (iii) combines the first and second adaptively filtered signals to produce a combined signal; and

a subtraction unit that subtracts the combined signal from the first audio signal, thereby producing the third audio signal.

According to an aspect of the invention, a telephone that provides improved performance is provided, comprising:

a microphone array, each microphone in the array configured to receive sound waves and to generate an audio signal corresponding thereto; and

a digital signal processor (DSP) that receives the audio signals from the microphone array and is configured to detect a direction of arrival (DOA) of at least one of (i) sound waves corresponding to a reverberation of a voice of a near-end user and (ii) sound waves corresponding to a voice signal of a far-end user, wherein the DSP adaptively combines the audio signals from the microphone array based on the DOA to produce a first audio output signal.

Advantageously, the DSP is further configured to adaptively combine the audio signals from the microphone array based on the DOA of sound waves corresponding to the reverberation of the voice of the near-end user to effectively steer a minimum sensitivity angle of the microphone array, wherein the minimum sensitivity angle is defined as an angle within which a sensitivity of the microphone array is below a threshold.

Advantageously, the DSP effectively steers the minimum sensitivity angle of the microphone array so that a source of the reverberation of the voice of the near-end user is within the minimum sensitivity angle.

Advantageously, the DSP is further configured to adaptively combine the audio signals based on the DOA of sound waves corresponding to the voice signal of the far-end user to effectively steer a minimum sensitivity angle of the microphone array, wherein the minimum sensitivity angle is defined as an angle within which a sensitivity of the microphone array is below a threshold.

Advantageously, the DSP effectively steers the minimum sensitivity angle of the microphone array so that a source of the sound waves corresponding to the far-end user's voice is within the minimum sensitivity angle.

Advantageously, the DSP is further configured to detect a DOA of sound waves corresponding to a voice of a near-end user; and

wherein the DSP is further configured to adaptively combine the audio signals from the microphone array based on the DOA of sound waves corresponding to the voice of the near-end user to effectively steer a maximum sensitivity angle of the microphone array, wherein the maximum sensitivity angle is defined as an angle within which a sensitivity of the microphone array is above a threshold.

Advantageously, the DSP effectively steers the maximum sensitivity angle of the microphone array so that the near-end user's mouth is within the maximum sensitivity angle.

Advantageously, the DSP is further configured to detect a DOA of sound waves corresponding to a voice of a near-end user; and

wherein the DSP is further configured (i) to adaptively combine the audio signals based on the DOA of sound waves corresponding to the voice signal of the far-end user to effectively steer a minimum sensitivity angle of the microphone array so that a source of the sound waves corresponding to the far-end user's voice is within the minimum sensitivity angle when the far-end user is talking, wherein the minimum sensitivity angle is defined as an angle within which a sensitivity of the microphone array is below a threshold, and (ii) to adaptively combine the audio signals based on the DOA of sound waves corresponding to the voice of the near-end user to effectively steer a maximum sensitivity angle of the microphone array so that the near-end user's mouth is within the maximum sensitivity angle when the near-end user is talking, wherein the maximum sensitivity angle is defined as an angle within which a sensitivity of the microphone array is above a threshold

According to an aspect of the invention, a method for processing audio signals in a telephone having at least two microphones is provided, comprising:

receiving a far-end audio signal comprising a voice component of a far-end user;
converting the far-end audio signal into sound waves;
picking up the sound waves and outputting a first audio signal from the first microphone, the first audio signal including a first voice component associated with the voice of a near-end user and a second voice component associated with the voice of the far-end user;
outputting a second audio signal from a second microphone;
processing the first audio signal, the second audio signal and the far-end audio signal in a voice activity detector (VAD) to generate output relating to at least one of (i) time intervals in which the first voice component is present in the first audio signal and (ii) time intervals in which the second voice component is present in the first audio signal; and canceling the second voice component included in the first audio signal based on the output of the VAD, thereby producing a third audio signal.

Advantageously, processing the first audio signal and the second audio signal comprises:

detecting a power ratio between the first and second audio signals.

Advantageously, canceling the second voice component included in the first audio signal based on the output of the VAD comprises:

adaptively filtering the far-end audio signal based on the output from the VAD to produce an adaptively filtered signal; and
subtracting the adaptively filtered signal from the first audio signal, thereby producing the third audio signal.

Advantageously, canceling the second voice component included in the first audio signal based on the output of the VAD comprises:

adaptively filtering the second audio signal based on the output from the VAD to produce an adaptively filtered signal; and
subtracting the adaptively filtered signal from the first audio signal, thereby producing the third audio signal.

Advantageously, canceling the second voice component included in the first audio signal based on the output of the VAD comprises:

adaptively filtering the far-end audio signal based on the output from the VAD to produce a first adaptively filtered signal;
adaptively filtering the second audio signal based on the output from the VAD to produce a second adaptively filtered signal;
combining the first and second adaptively filtered signals to produce a combined signal; and
subtracting the combined signal from the first audio signal, thereby producing the third audio signal.

According to an aspect of the invention, a method for processing audio signals in a telephone having a microphone array is provided, comprising:

(a) outputting an audio signal from each microphone in the microphone array based on sound waves incident thereon;
(b) detecting a direction of arrival (DOA) of at least one of (i) sound waves corresponding to a reverberation of a near-end user's voice and (ii) sound waves corresponding to a far-end user's voice; and
(c) adaptively combining the audio signals based on the DOA to produce a first audio output signal.

Advantageously, step (c) further comprises:

adaptively combining the audio signals based on the DOA of sound waves corresponding to the reverberation of the near-end user's voice to effectively steer a minimum sensitivity angle of the microphone array, wherein the minimum sensitivity angle is defined as an angle within which a sensitivity of the microphone array is below a threshold.

Advantageously, the method further comprises:

adaptively combining the audio signals based on the DOA of sound waves corresponding to the reverberation of the near-end user's voice to effectively steer the minimum sensitivity angle of the microphone array so that a source of the reverberation of the near-end user's voice is within the minimum sensitivity angle.

Advantageously, step (c) further comprises:

adaptively combining the audio signals based on the DOA of sound waves corresponding to the far-end user's voice to effectively steer a minimum sensitivity angle of the microphone array, wherein the minimum sensitivity angle is defined as an angle within which a sensitivity of the microphone array is below a threshold.

Advantageously, the method further comprises:

adaptively combining the audio signals based on the DOA of sound waves corresponding to the far-end user's voice to effectively steer the minimum sensitivity angle of the microphone array so that a source of the sound waves corresponding to the far-end user's voice is within the minimum sensitivity angle.

Advantageously, steps (b) and (c) further comprise:

(b1) detecting a DOA of sound waves corresponding to a voice of a near-end user; and
(c1) adaptively combining the audio signals from the microphone array based on the DOA of sound waves corresponding to the voice of the near-end user to effectively steer a maximum sensitivity angle of the microphone array, wherein the maximum sensitivity angle is defined as an angle within which a sensitivity of the microphone array is above a threshold.

Advantageously, the method further comprises:

effectively steering the maximum sensitivity angle of the microphone array so that the near-end user's mouth is within the maximum sensitivity angle.

Advantageously, steps (b) and (c) further comprise:

(b1) detecting a DOA of sound waves corresponding to a voice of a near-end user;
(c1) adaptively combining the audio signals based on the DOA of sound waves corresponding to the voice signal of the far-end user to effectively steer a minimum sensitivity angle of the microphone array so that a source of the sound waves corresponding to the far-end user's voice is within the minimum sensitivity angle when the far-end user is talking, wherein the minimum sensitivity angle is defined as an angle within which a sensitivity of the microphone array is below a threshold; and
(c2) adaptively combining the audio signals based on the DOA of sound waves corresponding to the voice of the near-end user to effectively steer a maximum sensitivity angle of the microphone array so that the near-end user's mouth is within the maximum sensitivity angle when the near-end user is talking, wherein the maximum sensitivity angle is defined as an angle within which a sensitivity of the microphone array is above a threshold.

Further embodiments and features of the present invention, as well as the structure and operation of the various embodiments of the present invention, are described in detail below with reference to the accompanying drawings.

Brief Description of the Drawings/Figures

The accompanying drawings, which are incorporated herein and form a part of the specification, illustrate the present invention and, together with the description, further serve to explain the principles of the invention and to enable a person skilled in the pertinent art to make and use the invention.
FIG. 1A is a functional block diagram of the transmit path of a conventional wireless telephone.
FIG. 1B is a functional block diagram of the receive path of a conventional wireless telephone.
FIG. 2 is a schematic representation of the front portion of a wireless telephone in accordance with an embodiment of the present invention.
FIG. 3 is a schematic representation of the back portion of a wireless telephone in accordance with an embodiment of the present invention.
FIG. 4 is a functional block diagram of a transmit path of a wireless telephone in accordance with an embodiment of the present invention.
FIG. 5 illustrates a flowchart of a method for processing audio signals in a wireless telephone having a first microphone and a second microphone in accordance with an embodiment of the present invention.
FIG. 6 is a functional block diagram of a signal processor in accordance with an embodiment of the present invention.
FIG. 7 illustrates a flowchart of a method for processing audio signals in a wireless telephone having a first microphone and a second microphone in accordance with an embodiment of the present invention.
FIG. 8 illustrates voice and noise components output from first and second microphones, in an embodiment of the present invention.
FIG. 9 is a functional block diagram of a background noise cancellation module in accordance with an embodiment of the present invention.

FIG. 10 is a functional block diagram of a signal processor in accordance with an embodiment of the present invention.

FIG. 11 illustrates a flowchart of a method for processing audio signals in a wireless telephone having a first microphone and a second microphone in accordance with an embodiment of the present invention.

FIG. 12A illustrates an exemplary frequency spectrum of a voice component and a background noise component of a first audio signal output by a first microphone, in an embodiment of the present invention.

FIG. 12B illustrates an exemplary frequency spectrum of an audio signal upon which noise suppression has been performed, in accordance with an embodiment of the present invention.

FIG. 13 is a functional block diagram of a transmit path of a wireless telephone in accordance with an embodiment of the present invention.

FIG. 14 is a flowchart depicting a method for processing audio signals in a wireless telephone having a first microphone and a second microphone in accordance with an embodiment of the present invention.

FIG. 15 shows exemplary plots depicting a voice component and a background noise component output by first and second microphones of a wireless telephone, in accordance with an embodiment of the present invention.

FIG. 16 shows an exemplary polar pattern of an omni-directional microphone.

FIG. 17 shows an exemplary polar pattern of a subcardioid microphone.

FIG. 18 shows an exemplary polar pattern of a cardioid microphone.

FIG. 19 shows an exemplary polar pattern of a hypercardioid microphone.

FIG. 20 shows an exemplary polar pattern of a line microphone.

FIG. 21 shows an exemplary microphone array, in accordance with an embodiment of the present invention.

FIGS. 22A-D show exemplary polar patterns of a microphone array.

FIG. 22E shows exemplary directivity patterns of a far-field and a near-field response.

FIG. 23 shows exemplary steered and unsteered directivity patterns.

FIG. 24 is a functional block diagram of a transmit path of a wireless telephone in accordance with an embodiment of the present invention.

FIG. 25 illustrates a multiple description transmission system in accordance with an embodiment of the present invention.

FIG. 26 is a functional block diagram of a transmit path of a wireless telephone that can be used in a multiple description transmission system in accordance with an embodiment of the present invention.

FIG. 27 illustrates multiple versions of a voice signal transmitted by a first wireless telephone in accordance with an embodiment of the present invention.

FIG. 28 is a functional block diagram of a telephone that provides improved acoustic echo cancellation by using multiple microphones in accordance with an embodiment of the present invention.

FIG. 29 is a functional block diagram of a transmit path and a receive path of a telephone that may be used to reduce room reverberation and/or acoustic echo, when the telephone is used in a speaker-phone mode, in accordance with an embodiment of the present invention.

FIG. 30 is a flowchart depicting a method for improved echo cancellation in a telephone having a first microphone and a second microphone in accordance with an embodiment of the present invention.

FIGS. 31A and 31B are flowcharts depicting methods for reducing the effects of room reverberation and acoustic echo, respectively, in a telephone used in a speaker-phone mode and having an adaptive microphone array.

The present invention will now be described with reference to the accompanying drawings. In the drawings, like reference numbers may indicate identical or functionally similar elements. Additionally, the left-most digit(s) of a reference number may identify the drawing in which the reference number first appears.

Detailed Description

The present invention is directed to a telephone implemented with multiple microphones and configured to provide improved echo cancellation. In addition, as will be described in more detail herein, the multiple microphones can be configured as an adaptive microphone array and may be used to reduce the room reverberation effect and/or acoustic echo, when the telephone is operated in a speaker-phone mode.

The detailed description of the invention is divided into eleven subsections. In subsection I, an overview of the workings of a conventional wireless telephone is discussed. This discussion facilitates the description of embodiments of the present invention. In subsection II, an overview of a wireless telephone implemented with a first microphone and second microphone is presented. In subsection III, an embodiment is described in which the output of the second microphone is used to cancel a background noise component output by the first microphone. In subsection IV, another embodiment is described in which the output of the second microphone is used to suppress a background noise component output by the first microphone. In subsection V, a further embodiment is discussed in which the output of the second microphone is used to improve VAD technology incorporated in the wireless telephone. In subsection VI, alternative arrangements of the present invention are discussed. In subsection VII, example uni-directional microphones are discussed. In subsection VIII, example microphone arrays are discussed. In subsection IX, a wireless telephone implemented with at least one microphone array is described. In subsection X, a multiple description transmission system in accordance with embodiments of the present invention is described. In subsection XI, embodiments that use multiple microphones to improve the performance of a telephone used in speaker-phone mode are described.

I. Overview of Signal Processing within Conventional Wireless Telephones

Conventional wireless telephones use what is commonly referred to as encoder/decoder technology. The transmit path of a wireless telephone encodes an audio signal picked up by a microphone onboard the wireless telephone. The encoded audio signal is then transmitted to another telephone. The receive path of a wireless telephone receives signals transmitted from other wireless telephones. The received signals are then decoded into a format that an end user can understand.

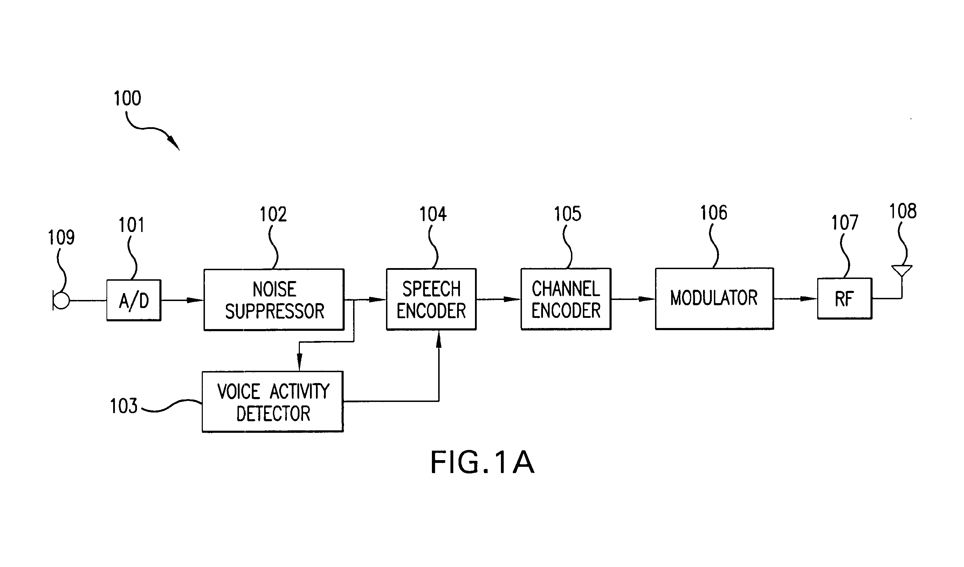

FIG. 1A is a functional block diagram of a typical transmit path 100 of a conventional digital wireless telephone. Transmit path 100 includes a microphone 109, an analog-to-digital (A/D) converter 101, a noise suppressor 102, a voice activity detector (VAD) 103, a speech encoder 104, a channel encoder 105, a modulator 106, a radio frequency (RF) module 107, and an antenna 108.

Microphone 109 receives a near-end user's voice and outputs a corresponding audio signal, which typically includes both a voice component and a background noise component. The A/D converter 101 converts the audio signal from an analog to a digital form. The audio signal is next processed through noise suppressor 102. Noise suppressor 102 uses various algorithms, known to persons skilled in the pertinent art, to suppress the level of embedded background noise that is present in the audio signal.

Speech encoder 104 converts the output of noise suppressor 102 into a channel index. The particular format that speech encoder 104 uses to encode the signal is dependent upon the type of technology being used. For example, the signal may be encoded in formats that comply with GSM (Global Standard for Mobile Communication), CDMA (Code Division Multiple Access), or other technologies commonly used for telecommunication. These different encoding formats are known to persons skilled in the relevant art and for the sake of brevity are not discussed in further detail.

As shown in FIG. 1A, VAD 103 also receives the output of noise suppressor 102. VAD 103 uses algorithms known to persons skilled in the pertinent art to analyze the audio signal output by noise suppressor 102 and determine when the user is speaking. VAD 103 typically operates on a frame-by-frame basis to generate a signal that indicates whether or not a frame includes voice content. This signal is provided to speech encoder 104, which uses the signal to determine how best to process the frame. For example, if VAD 103 indicates that a frame does not include voice content, speech encoder 103 may skip the encoding of the frame entirely.

Channel encoder 105 is employed to reduce bit errors that can occur after the signal is processed through the speech encoder 104. That is, channel encoder 105 makes the signal more robust by adding redundant bits to the signal. For example, in a wireless phone implementing the original GSM technology, a typical bit rate at the output of the speech encoder might be about 13 kilobits (kb) per second, whereas, a typical bit rate at the output of the channel encoder might be about 22 kb/sec. The extra bits that are present in the signal after channel encoding do not carry information about the speech; they just make the signal more robust, which helps reduce the bit errors.

The modulator 106 combines the digital signals from the channel encoder into symbols, which become an analog wave form. Finally, RF module 107 translates the analog wave forms into radio frequencies, and then transmits the RF signal via antenna 108 to another telephone.

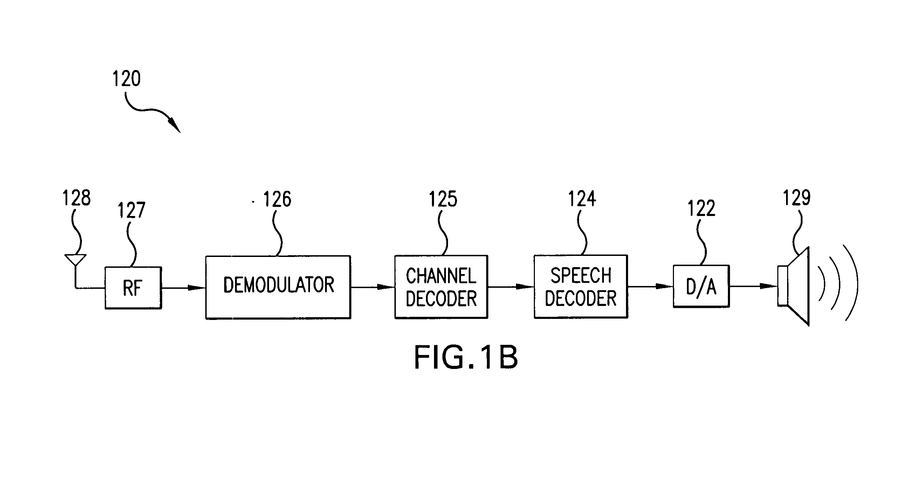

FIG. 1B is a functional block diagram of a typical receive path 120 of a conventional wireless telephone. Receive path 120 processes an incoming signal in almost exactly the reverse fashion as compared to transmit path 100. As shown in FIG. 1B, receive path 120 includes an antenna 128, an RF module 127, a channel decoder 125, a speech decoder 124, a digital to analog (D/A) converter 122, and a speaker 129.

During operation, an analog input signal is received by antenna 128 and RF module 127 translates the radio frequencies into baseband frequencies. Demodulator 126 converts the analog waveforms back into a digital signal. Channel decoder 125 decodes the digital signal back into the channel index, which speech decoder 124 converts back into digitized speech. D/A converter 122 converts the digitized speech into analog speech. Lastly, speaker 129 converts the analog speech signal into a sound pressure wave so that it can be heard by an end user.

II. Overview of a Wireless Telephone Having Two Microphones in Accordance with The Present Invention

A wireless telephone in accordance with an embodiment of the present invention includes a first microphone and a second microphone. As mentioned above and as will be described in more detail herein, an audio signal output by the second microphone can be used to improve the quality of an audio signal output by the first microphone or to support improved VAD technology.

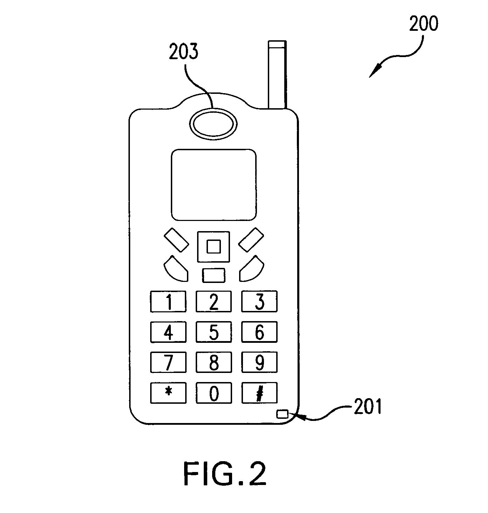

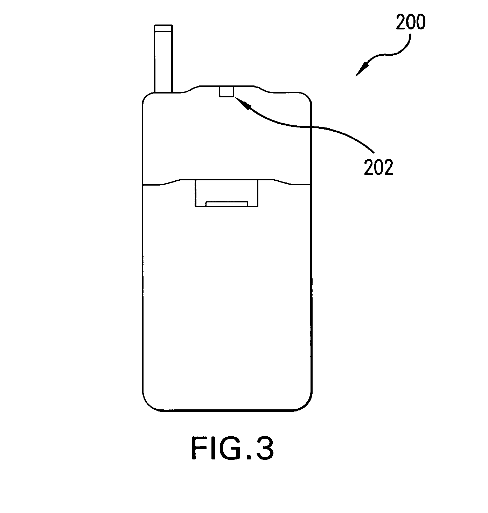

FIGS. 2 and 3 illustrate front and back portions, respectively, of a wireless telephone 200 in accordance with an embodiment of the present invention. As shown in FIG. 2, the front portion of wireless telephone 200 includes a first microphone 201 and a loudspeaker 203 located thereon. First microphone 201 is located so as to be close to a user's mouth during regular use of wireless telephone 200. Speaker 203 is located so as to be close to a user's ear during regular use of wireless telephone 200.

As shown in FIG. 3, second microphone 202 is located on the back portion of wireless telephone 200. Second microphone 202 is located so as to be further away from a user's mouth during regular use than first microphone 201, and preferably is located to be as far away from the user's mouth during regular use as possible.

By mounting first microphone 201 so that it is closer to a user's mouth than second microphone 202 during regular use, the amplitude of the user's voice as picked up by the first microphone 201 will likely be greater than the amplitude of the user's voice as picked up by second microphone 202. Similarly, by so mounting first microphone 201 and second microphone 202, the amplitude of any background noise picked up by second microphone 202 will likely be greater than the amplitude of the background noise picked up by first microphone 201. The manner in which the signals generated by first microphone 201 and second microphone 202 are utilized by wireless telephone 200 will be described in more detail below.

FIGS. 2 and 3 show an embodiment in which first and second microphones 201 and 202 are mounted on the front and back portion of a wireless telephone, respectively. However, the invention is not limited to this embodiment and the first and second microphones may be located in other locations on a wireless telephone and still be within the scope of the present invention. For performance reasons, however, it is preferable that the first and second microphone be mounted so that the first microphone is closer to the mouth of a user than the second microphone during regular use of the wireless telephone.

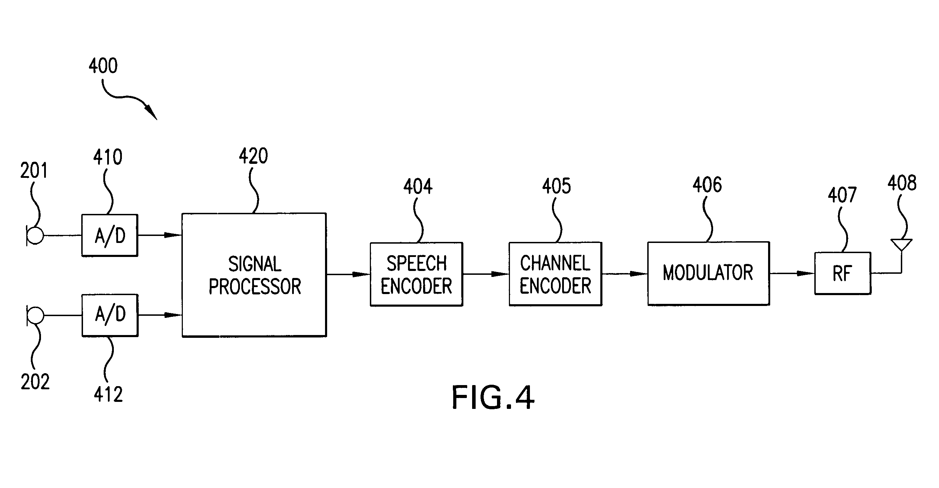

FIG. 4 is a functional block diagram of a transmit path 400 of a wireless telephone that is implemented with a first microphone and a second microphone in accordance with an embodiment of the present invention. Transmit path 400 includes a first microphone 201 and a second microphone 202, and a first A/D converter 410 and a second A/D converter 412. In addition, transmit path 400 includes a signal processor 420, a speech encoder 404, a channel encoder 405, a modulator 406, an RF module 407, and an antenna 408. Speech encoder 404, channel encoder 405, modulator 406, RF module 407, and antenna 408 are respectively analogous to speech encoder 104, channel encoder 105, modulator 106, RF module 107, and antenna 108 discussed with reference to transmit path 100 of FIG. 1A and thus their operation will not be discussed in detail below.

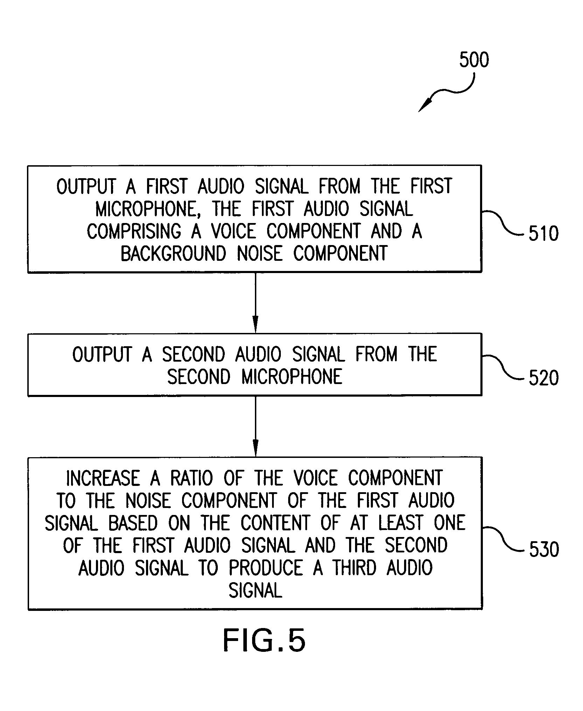

The method by which audio signals are processed along transmit path 400 of the wireless telephone depicted in FIG. 4 will now be described with reference to the flowchart 500 of FIG. 5. The present invention, however, is not limited to the description provided by the flowchart 500. Rather, it will be apparent to persons skilled in the relevant art (s) from the teachings provided herein that other functional flows are within the scope and spirit of the present invention.

The method of flowchart 500 begins at step 510, in which first microphone 201 outputs a first audio signal, which includes a voice component and a background noise component. A/D converter 410 receives the first audio signal and converts it from an analog to digital format before providing it to signal processor 420.

At step 520, second microphone 202 outputs a second audio signal, which also includes a voice component and a background noise component. A/D converter 412 receives the second audio signal and converts it from an analog to digital format before providing it to signal processor 420.

At step 530, signal processor 420 receives and processes the first and second audio signals, thereby generating a third audio signal. In particular, signal processor 420 increases a ratio of the voice component to the noise component of the first audio signal based on the content of the second audio signal to produce a third audio signal.

The third audio signal is then provided directly to speech encoder 404. Speech encoder 404 and channel encoder 405 operate to encode the third audio signal using any of a variety of well known speech and channel encoding techniques. Modulator 406, RF module and antenna 408 then operate in a well-known manner to transmit the encoded audio signal to another telephone.

As will be discussed in more detail herein, signal processor 420 may comprise a background noise cancellation module and/or a noise suppressor. The manner in which the background noise cancellation module and the noise suppressor operate are described in more detail in subsections III and IV, respectively.

III. Use of Two Microphones to Perform Background Noise Cancellation in Accordance with an Embodiment of the Present Invention

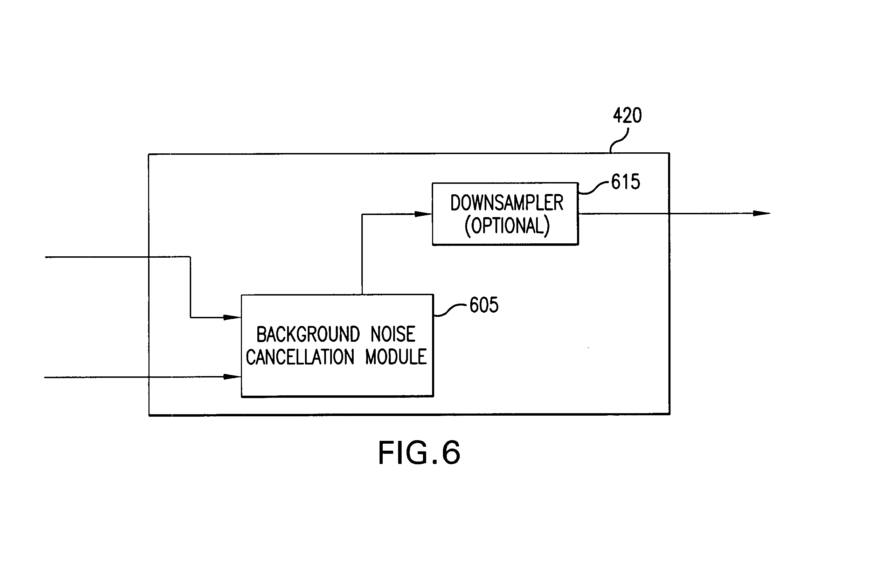

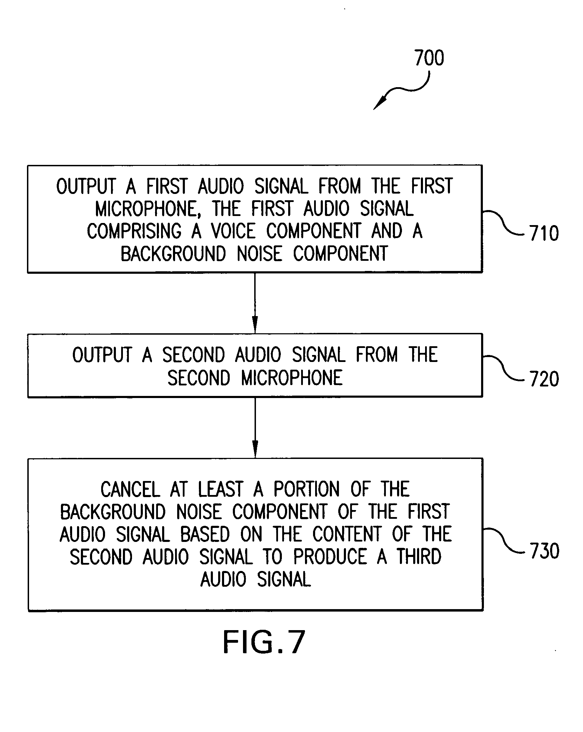

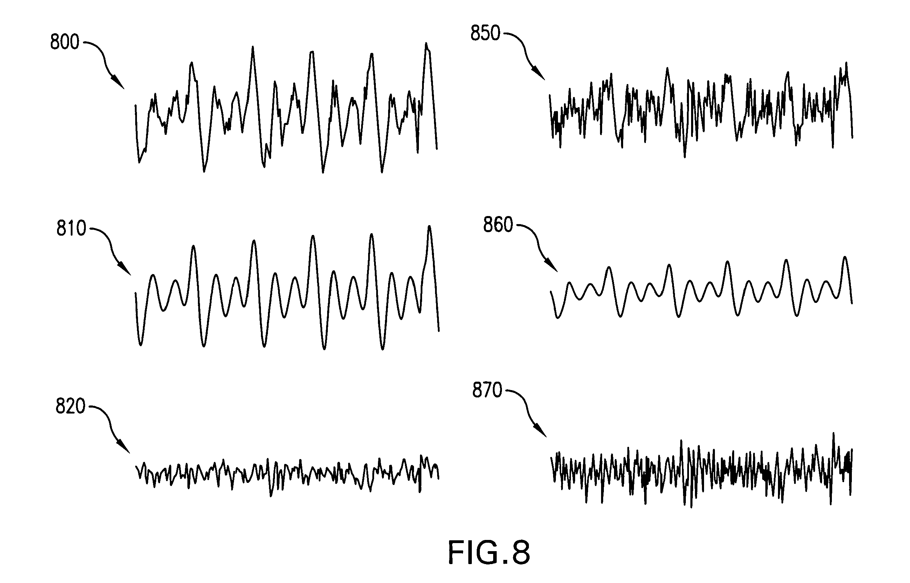

FIG. 6 depicts an embodiment in which signal processor 420 includes a background noise cancellation module 605 and a downsampler 615 (optional). Background noise cancellation module 605 receives the first and second audio signals output by the first and second microphones 201 and 202, respectively. Background noise cancellation module 605 uses the content of the second audio signal to cancel a background noise component present in the first audio signal to produce a third audio signal. The details of the cancellation are described below with reference to FIGS. 7 and 8. The third audio signal is sent to the rest of transmit path 400 before being transmitted to the telephone of a far-end user.

FIG. 7 illustrates a flowchart 700 of a method for processing audio signals using a wireless telephone having two microphones in accordance with an embodiment of the present invention. Flowchart 700 is used to facilitate the description of how background noise cancellation module 605 cancels at least a portion of a background noise component included in the first audio signal output by first microphone 201.

The method of flowchart 700 starts at step 710, in which first microphone 201 outputs a first audio signal. The first audio signal includes a voice component and a background noise component. In step 720, second microphone 202 outputs a second audio signal. Similar to the first audio signal, the second audio signal includes a voice component and a background noise component.

FIG. 8 shows exemplary outputs from first and second microphones 201 and 202, respectively, upon which background noise cancellation module 605 may operate. FIG. 8 shows an exemplary first audio signal 800 output by first microphone 201. First audio signal 800 consists of a voice component 810 and a background noise component 820, which are also separately depicted in FIG. 8 for illustrative purposes. FIG. 8 further shows an exemplary second audio signal 850 output by second microphone 202. Second audio signal 850 consists of a voice component 860 and a background noise component 870, which are also separately depicted in FIG. 8. As can be seen from FIG. 8, the amplitude of the voice component picked up by first microphone 201 (i.e., voice component 810) is advantageously greater than the amplitude of the voice component picked up by second microphone 202 (i.e., voice component 860), and vice versa for the background noise components. As was discussed earlier, the relative amplitude of the voice component (background noise component) picked up by first microphone 201 and second microphone 202 is a function of their respective locations on wireless telephone 200.

At step 730 (FIG. 7), background noise cancellation module 605 uses the second audio signal to cancel at least a portion of the background noise component included in the first audio signal output by first microphone 201. Finally, the third audio signal produced by background noise cancellation module 605 is transmitted to another telephone. That is, after background noise cancellation module 605 cancels out at least a portion of the background noise component of the first audio signal output by first microphone 201 to produce a third audio signal, the third audio signal is then processed through the standard components or processing steps used in conventional encoder/decoder technology, which were described above with reference to FIG. 1A. The details of these additional signal processing steps are not described further for brevity.

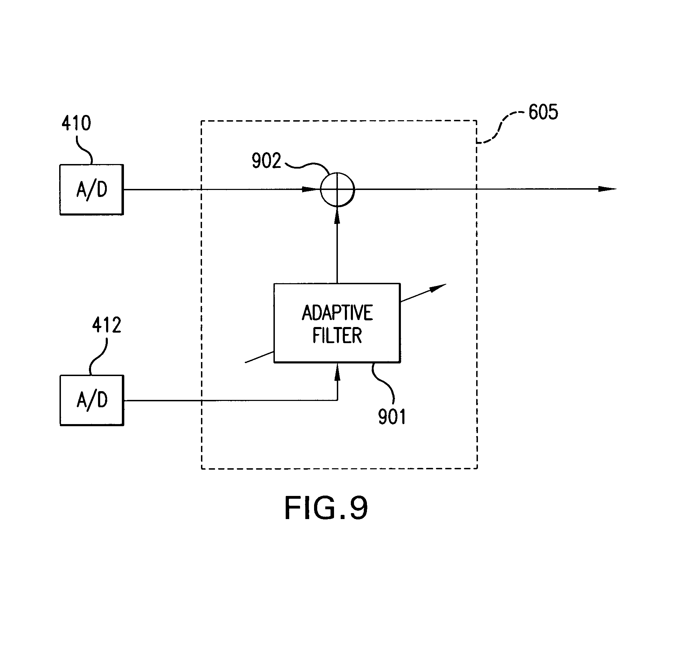

In one embodiment, background noise cancellation module 605 includes an adaptive filter and an adder. FIG. 9 depicts a background noise cancellation module 605 including an adaptive filter 901 and an adder 902. Adaptive filter 901 receives the second audio signal from second microphone 202 and outputs an audio signal. Adder 902 adds the first audio signal, received from first microphone 201, to the audio signal output by adaptive filter 901 to produce a third audio signal. By adding the first audio signal to the audio signal output by adaptive filter 901, the third audio signal produced by adder 902 has at least a portion of the background noise component that was present in the first audio signal cancelled out.

In another embodiment of the present invention, signal processor 420 includes a background noise cancellation module 605 and a downsampler 615. In accordance with this embodiment, A/D converter 410 and A/D converter 412 sample the first and second audio signals output by first and second microphones 201 and 202, respectively, at a higher sampling rate than is typically used within wireless telephones. For example, the first audio signal output by first microphone 201 and the second audio signal output by second microphones 202 can be sampled at 16 kHz by A/D converters 410 and 412, respectively; in comparison, the typical signal sampling rate used in a transmit path of most conventional wireless telephones is 8 kHz. After the first and second audio signals are processed through background noise cancellation module 605 to cancel out the background noise component from the first audio signal, downsampler 615 downsamples the third audio signal produced by background cancellation module 605 back to the proper sampling rate (e.g. 8 kHz). The higher sampling rate of this embodiment offers more precise time slicing and more accurate time matching, if added precision and accuracy are required in the background noise cancellation module 605.

As mentioned above and as is described in more detail in the next subsection, additionally or alternatively, the audio signal output by the second microphone is used to improve noise suppression of the audio signal output by the first microphone.

IV. Use of Two Microphones to Perform Improved Noise Suppression in Accordance with an Embodiment of the Present Invention

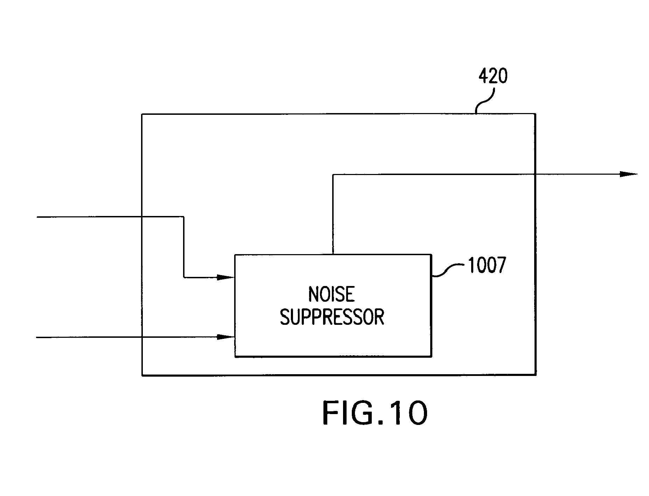

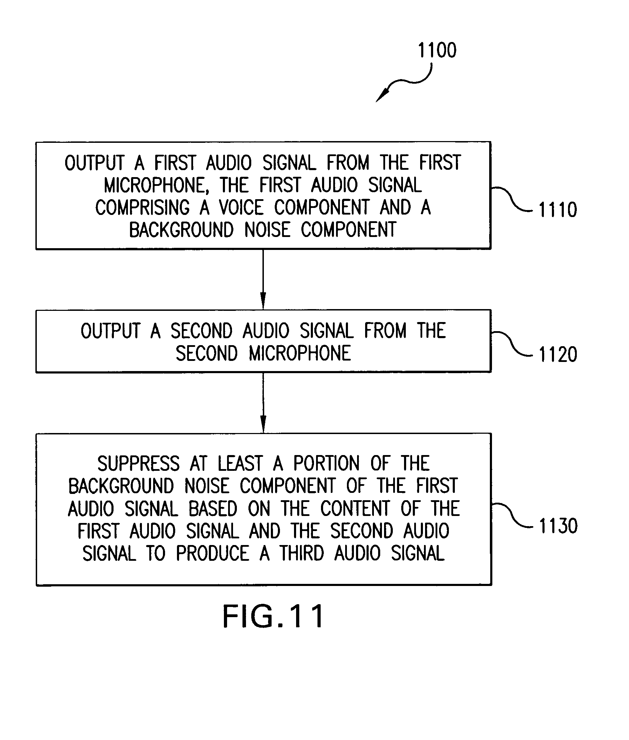

As noted above, signal processor 420 may include a noise suppressor. FIG. 10 shows an embodiment in which signal processor 420 includes a noise suppressor 1007. In accordance with this embodiment, noise suppressor 1007 receives the first audio signal and the second audio signal output by first and second microphones 201 and 202, respectively. Noise suppressor 1007 suppresses at least a portion of the background noise component included in the first audio signal based on the content of the first audio signal and the second audio signal. The details of this background noise suppression are described in more detail with reference to FIG. 11.

FIG. 11 illustrates a flowchart 1100 of a method for processing audio signals using a wireless telephone having a first and a second microphone in accordance with an embodiment of the present invention. This method is used to suppress at least a portion of the background noise component included in the output of the first microphone.

The method of flowchart 1100 begins at step 1110, in which first microphone 201 outputs a first audio signal that includes a voice component and a background noise component. In step 1120, second microphone 202 outputs a second audio signal that includes a voice component and a background noise component.

At step 1130, noise suppressor 1007 receives the first and second audio signals and suppresses at least a portion of the background noise component of the first audio signal based on the content of the first and second audio signals to produce a third audio signal. The details of this step will now be described in more detail.

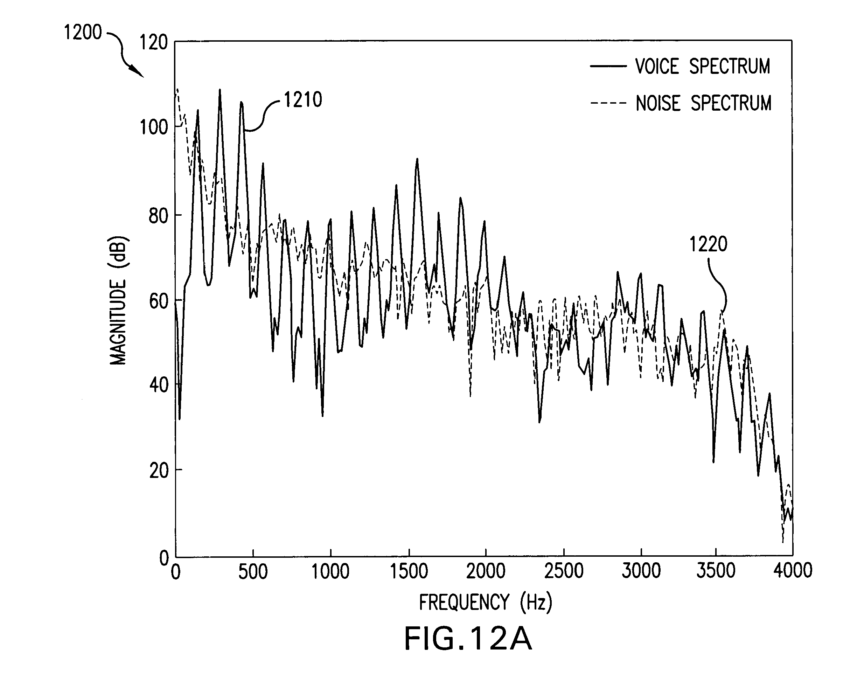

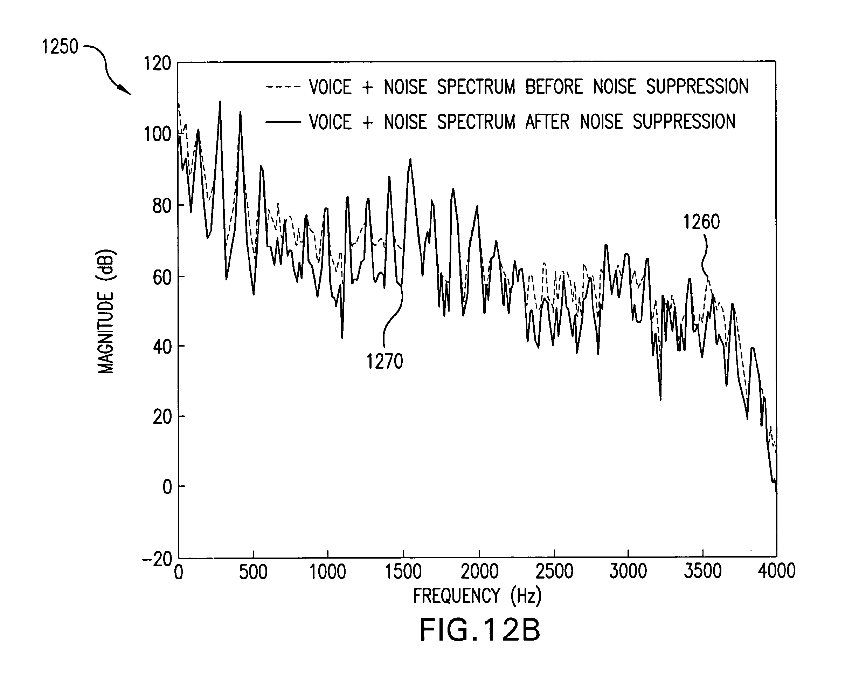

In one embodiment, noise suppressor 1007 converts the first and second audio signals into the frequency domain before suppressing the background noise component in the first audio signal. FIGS. 12A and 12B show exemplary frequency spectra that are used to illustrate the function of noise suppressor 1007.

Fig. 12A shows two components: a voice spectrum component 1210 and a noise spectrum component 1220. Voice spectrum 1210 includes pitch harmonic peaks (the equally spaced peaks) and the three formants in the spectral envelope.

Fig. 12A is an exemplary plot used for conceptual illustration purposes only. It is to be appreciated that voice component 1210 and noise component 1220 are mixed and inseparable in audio signals picked up by actual microphones. In reality, a microphone picks up a single mixed voice and noise signal and its spectrum.

Fig. 12B shows an exemplary single mixed voice and noise spectrum before noise suppression (i.e., spectrum 1260) and after noise suppression (i.e., spectrum 1270). For example, spectrum 1260 is the magnitude of a Fast Fourier Transform (FFT) of the first audio signal output by first microphone 201.

A typical noise suppressor keeps an estimate of the background noise spectrum (e.g., spectrum 1220 in FIG. 12A), and then compares the observed single voice and noise spectrum (e.g., spectrum 1260 in FIG. 12B) with this estimated background noise spectrum to determine whether each frequency component is predominately voice or predominantly noise. If it is considered predominantly noise, the magnitude of the FFT coefficient at that frequency is attenuated. If it is considered predominantly voice, then the FFT coefficient is kept as is. This can be seen in Fig. 12B.

There are many frequency regions where spectrum 1270 is on top of spectrum 1260. These frequency regions are considered to contain predominantly voice. On the other hand, regions where spectrum 1260 and spectrum 1270 are at different places are the frequency regions that are considered predominantly noise. By attenuating the frequency regions that are predominantly noise, noise suppressor 1007 produces a third audio signal (e.g., an audio signal corresponding to frequency spectrum 1270) with an increased ratio of the voice component to background noise component compared to the first audio signal.

The operations described in the last two paragraphs above correspond to a conventional single-microphone noise suppression scheme. According to an embodiment of the present invention, noise suppressor 1007 additionally uses the spectrum of the second audio signal picked up by the second microphone to estimate the background noise spectrum 1220 more accurately than in a single-microphone noise suppression scheme.

In a conventional single-microphone noise suppressor, background noise spectrum 1220 is estimated between "talk spurts", i.e., during the gaps between active speech segments corresponding to uttered syllables. Such a scheme works well only if the background noise is relatively stationary, i.e., when the general shape of noise spectrum 1220 does not change much during each talk spurt. If noise spectrum 1220 changes significantly through the duration of the talk spurt, then the single-microphone noise suppressor will not work well because the noise spectrum estimated during the last "gap" is not reliable. Therefore, in general, and especially for non-stationary background noise, the availability of the spectrum of the second audio signal picked up by the second microphone allows noise suppressor 1007 to get a more accurate, up-to-date estimate of noise spectrum 1220, and thus achieve better noise suppression performance.

Note that the spectrum of the second audio signal should not be used directly as the estimate of the noise spectrum 1220. There are at least two problems with using the spectrum of the second audio signal directly: first, the second audio signal may still have some voice component in it; and second, the noise component in the second audio signal is generally different from the noise component in the first audio signal.

To circumvent the first problem, the voice component can be cancelled out of the second audio signal. For example, in conjunction with a noise cancellation scheme, the noise-cancelled version of the first audio signal, which is a cleaner version of the main voice signal, can pass through an adaptive filter. The signal resulting from the adaptive filter can be added to the second audio signal to cancel out a large portion of the voice component in the second audio signal.

To circumvent the second problem, an approximation of the noise component in the first audio signal can be determined, for example, by filtering the voice-cancelled version of the second audio signal with adaptive filter 901.

The example method outlined above, which includes the use of a first and second audio signal, allows noise suppressor 1007 to obtain a more accurate and up-to-date estimate of noise spectrum 1220 during a talk spurt than a conventional noise suppression scheme that only uses one audio signal. An alternative embodiment of the present invention can use the second audio signal picked up by the second microphone to help obtain a more accurate determination of talk spurts versus inter-syllable gaps; and this will, in turn, produce a more reliable estimate of noise spectrum 1220, and thus improve the noise suppression performance.

For the particular example of Fig. 12B, spectrum 1260 in the noise regions is attenuated by 10 dB resulting in spectrum 1270. It should be appreciated that an attenuation of 10 dB is shown for illustrative purposes, and not limitation. It will be apparent to persons having ordinary skill in the art that spectrum 1260 could be attenuated by more or less than 10 dB.

Lastly, the third audio signal is transmitted to another telephone. The processing and transmission of the third audio signal is achieved in like manner to that which was described above in reference to conventional transmit path 100 (FIG. 1A).

As mentioned above and as is described in more detail in the next subsection, additionally or alternatively, the audio signal output by the second microphone is used to improve VAD technology incorporated within the wireless telephone.

V. Use of Two Microphones to Perform Improved VAD in Accordance with an Embodiment of the Present Invention

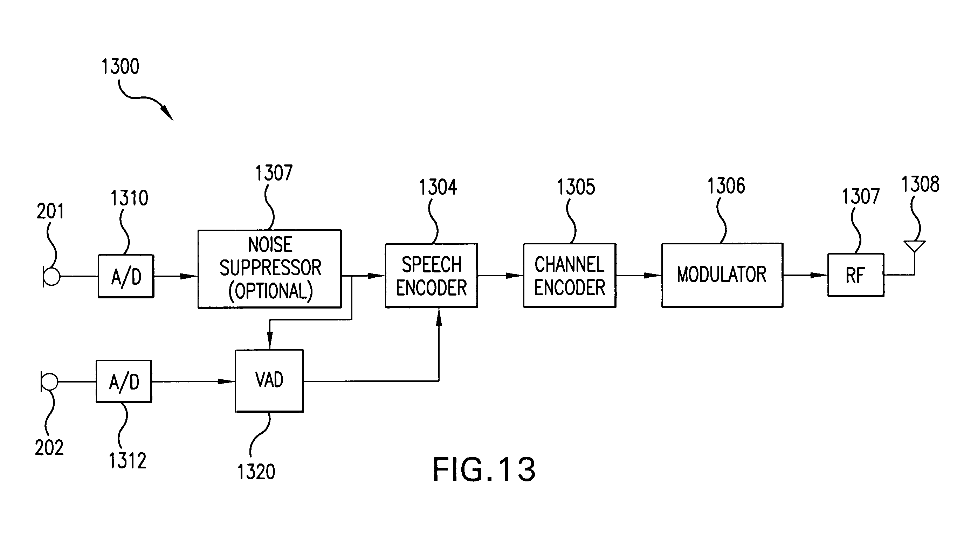

FIG. 13 is a functional block diagram of a transmit path 1300 of a wireless telephone that is implemented with a first microphone and a second microphone in accordance with an embodiment of the present invention. Transmit path 1300 includes a first microphone 201 and a second microphone 202. In addition, transmit path 1300 includes an A/D converter 1310, an A/D converter 1312, a noise suppressor 1307 (optional), a VAD 1320, a speech encoder 1304, a channel encoder 1305, a modulator 1306, an RF module 1307, and an antenna 1308. Speech encoder 1304, channel encoder 1305, modulator 1306, RF module 1307, and antenna 1308 are respectively analogous to speech encoder 104, channel encoder 105, modulator 106, RF module 107, and antenna 108 discussed with reference to transmit path 100 of FIG. 1A and thus their operation will not be discussed in detail below.

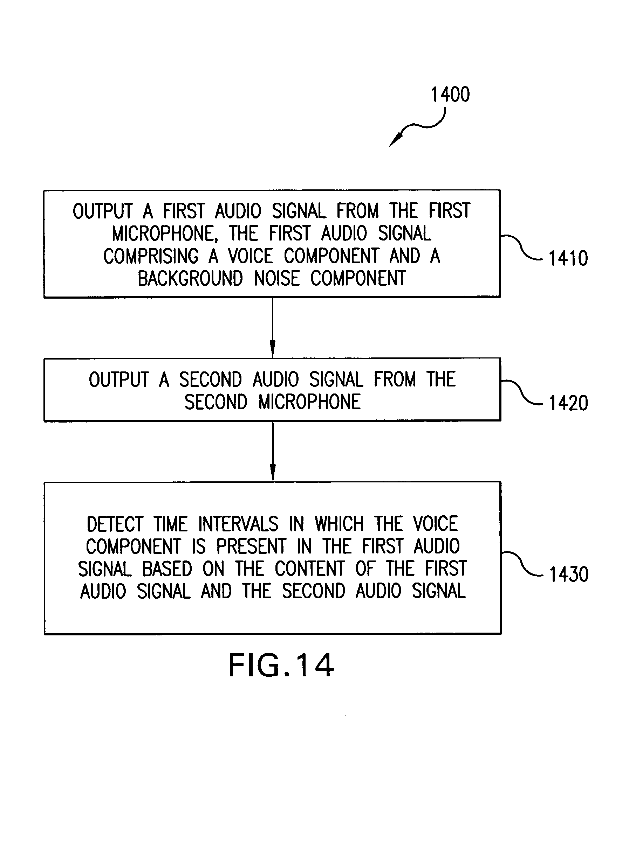

For illustrative purposes and not limitation, transmit path 1300 is described in an embodiment in which noise suppressor 1307 is not present. In this example embodiment, VAD 1320 receives the first audio signal and second audio signal output by first microphone 201 and the second microphone 202, respectively. VAD 1320 uses both the first audio signal output by the first microphone 201 and the second audio signal output by second microphone 202 to provide detection of voice activity in the first audio signal. VAD 1320 sends an indication signal to speech encoder 1304 indicating which time intervals of the first audio signal include a voice component. The details of the function of VAD 1320 are described with reference to FIG. 14.

FIG. 14 illustrates a flowchart 1400 of a method for processing audio signals in a wireless telephone having a first and a second microphone, in accordance with an embodiment of the present invention. This method is used to detect time intervals in which an audio signal output by the first microphone includes a voice component.

The method of flowchart 1400 begins at step 1410, in which first microphone 201 outputs a first audio signal the includes a voice component and a background noise component. In step 1420, second microphone 202 outputs a second audio signal that includes a voice component and a background noise component.

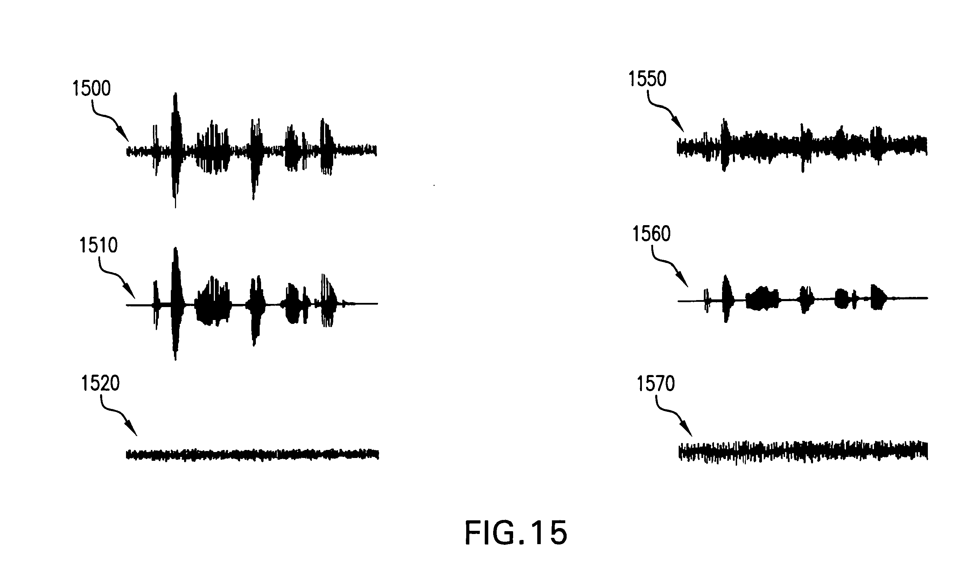

FIG. 15 shows exemplary plots of the first and second audio signals output by first and second microphones 201 and 202, respectively. Plot 1500 is a representation of the first audio signal output by first microphone 201. The audio signal shown in plot 1500 includes a voice component 1510 and a background noise component 1520. The audio signal shown in plot 1550 is a representation of the second audio signal output by second microphone 202. Plot 1550 also includes a voice component 1560 and a background noise component 1570. As discussed above, since first microphone 201 is preferably closer to a user's mouth during regular use than second microphone 202, the amplitude of voice component 1510 is greater than the amplitude of voice component 1560. Conversely, the amplitude of background noise component 1570 is greater than the amplitude of background noise component 1520.

As shown in step 1430 of flowchart. 1400, VAD 1320, based on the content of the first audio signal (plot 1500) and the second audio signal (plot 1550), detects time intervals in which voice component 1510 is present in the first audio signal. By using the second audio signal in addition to the first audio signal to detect voice activity in the first audio signal, VAD 1320 achieves improved voice activity detection as compared to VAD technology that only monitors one audio signal. That is, the additional information coming from the second audio signal, which includes mostly background noise component 1570, helps VAD 1320 better differentiate what in the first audio signal constitutes the voice component, thereby helping VAD 1320 achieve improved performance.

As an example, according to an embodiment of the present invention, in addition to all the other signal features that a conventional single-microphone VAD normally monitors, VAD 1320 can also monitor the energy ratio or average magnitude ratio between the first audio signal and the second audio signal to help it better detect voice activity in the first audio signal. This possibility is readily evident by comparing first audio signal 1500 and second audio signal 1550 in FIG. 15. For audio signals 1500 and 1550 shown in FIG. 15, the energy of first audio signal 1500 is greater than the energy of second audio signal 1550 during talk spurt (active speech). On the other hand, during the gaps between talk spurts (i.e. background noise only regions), the opposite is true. Thus, the energy ratio of the first audio signal over the second audio signal goes from a high value during talk spurts to a low value during the gaps between talk spurts. This change of energy ratio provides a valuable clue about voice activity in the first audio signal. This valuable clue is not available if only a single microphone is used to obtain the first audio signal. It is only available through the use of two microphones, and VAD 1320 can use this energy ratio to improve its accuracy of voice activity detection.

VI. Alternative Embodiments of the Present Invention

In an example alternative embodiment (not shown), signal processor 420 includes both a background noise cancellation module and a noise suppressor. In this embodiment, the background noise cancellation module cancels at least a portion of a background noise component included in the first audio signal based on the content of the second audio signal to produce a third audio signal. Then the noise suppressor receives the second and third audio signals and suppresses at least a portion of a residual background noise component present in the third audio signal based on the content of the second audio signal and the third audio signal, in like manner to that described above. The noise suppressor then provides a fourth audio signal to the remaining components and/or processing steps, as described above.

In another alternative example embodiment, a transmit path having a first and second microphone can include a signal processor (similar to signal processor 420) and a VAD (similar to VAD 1320). A person having ordinary skill in the art will appreciate that a signal processor can precede a VAD in a transmit path, or vice versa. In addition, a signal processor and a VAD can process the outputs of the two microphones contemporaneously. For illustrative purposes, and not limitation, an embodiment in which a signal processor precedes a VAD in a transmit path having two microphones is described in more detail below.

In this illustrative embodiment, a signal processor increases a ratio of a voice component to a background noise component of a first audio signal based on the content of at least one of the first audio signal and a second audio signal to produce a third audio signal (similar to the function of signal processor 420 described in detail above). The third audio signal is then received by a VAD. The VAD also receives a second audio signal output by a second microphone (e.g., second microphone 202). In a similar manner to that described in detail above, the VAD detects time intervals in which a voice component is present in the third signal based on the content of the second audio signal and the third audio signal.

In a still further embodiment, a VAD can precede a noise suppressor, in a transmit path having two microphones. In this embodiment, the VAD receives a first audio signal and a second audio signal output by a first microphone and a second microphone, respectively, to detect time intervals in which a voice component is present in the first audio signal based on the content of the first and second audio signals, in like manner to that described above. The noise suppressor receives the first and second audio signals and suppresses a background noise component in the first audio signal based on the content of the first audio signal and the second audio signal, in like manner to that described above.

VII. Embodiments Implementing Uni-Directional Microphones

At least one of the microphones used in exemplary wireless telephone 200 can be a uni-directional microphone in accordance with an embodiment of the present invention. As will be described in more detail below, a uni-directional microphone is a microphone that is most sensitive to sound waves originating from a particular direction (e.g., sound waves coming from directly in front of the microphone). Some of the information provided below concerning uni-directional and omni-directional microphones was found on the following website: <http://www.audio-technica.com/using/mphones/guide/pattern.html>.

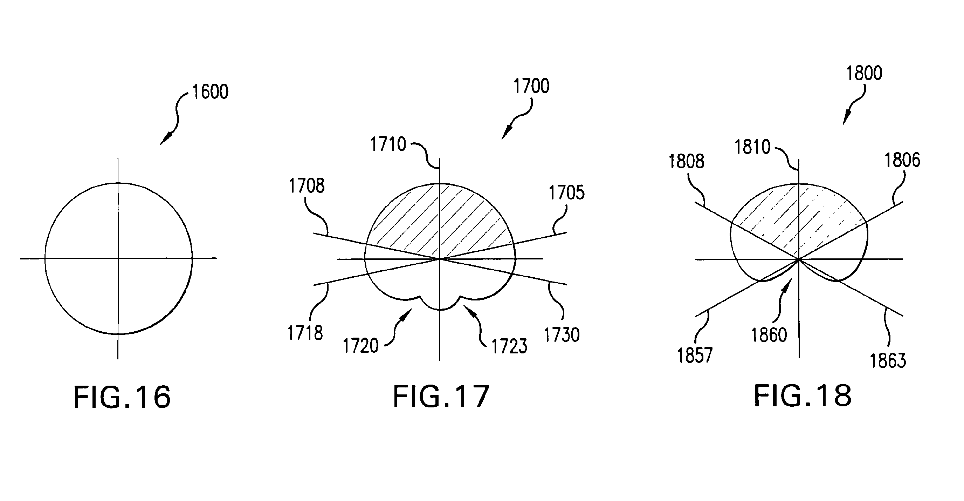

Persons skilled in the relevant art(s) will appreciate that microphones are often identified by their directional properties—that is, how well the microphones pick up sound from various directions. Omni-directional microphones pick up sound from just about every direction equally. Thus, omni-directional microphones work substantially the same pointed away from a subject as pointed toward it, if the distances are equal. FIG. 16 illustrates a polar pattern 1600 of an omni-directional microphone. A polar pattern is a round plot that illustrates the sensitivity of a microphone in decibels (dB) as it rotates in front of a fixed sound source. Polar patterns, which are also referred to in the art as "pickup patterns" or "directional patterns," are well-known graphical aids for illustrating the directional properties of a microphone. As shown by polar pattern 1600 of FIG. 16, an omni-directional microphone picks up sounds equally in all directions.

In contrast to omni-directional microphones, uni-directional microphones are specially designed to respond best to sound originating from a particular direction while tending to reject sound that arrives from other directions. This directional ability is typically implemented through the use of external openings and internal passages in the microphone that allow sound to reach both sides of the diaphragm in a carefully controlled way. Thus, in an example uni-directional microphone, sound arriving from the front of the microphone will aid diaphragm motion, while sound arriving from the side or rear will cancel diaphragm motion.

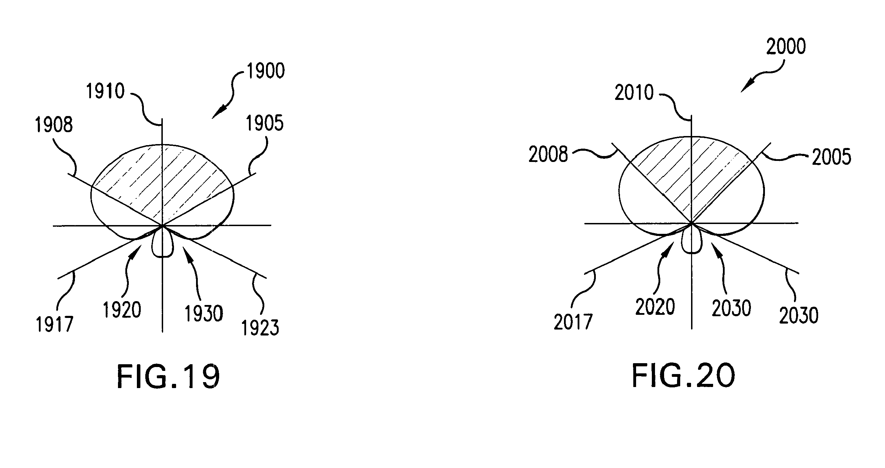

Exemplary types of uni-directional microphones include but are not limited to subcardioid, cardioid, hypercardioid, and line microphones. Polar patterns for example microphones of each of these types are provided in FIG. 17 (subcardioid), FIG. 18 (cardioid), FIG. 19 (hypercardioid) and FIG. 20 (line). Each of these figures shows the acceptance angle and null(s) for each microphone. The acceptance angle is the maximum angle within which a microphone may be expected to offer uniform sensitivity. Acceptance angles may vary with frequency; however, high-quality microphones have polar patterns which change very little when plotted at different frequencies. A null defines the angle at which a microphone exhibits minimum sensitivity to incoming sounds.

FIG. 17 shows an exemplary polar pattern 1700 for a subcardioid microphone. The acceptance angle for polar pattern 1700 spans 170-degrees, measured in a counterclockwise fashion from line 1705 to line 1708. The null for polar pattern 1700 is not located at a particular point, but spans a range of angles—i.e., from line 1718 to line 1730. Lines 1718 and 1730 are at 100-degrees from upward-pointing vertical axis 1710, as measured in a counterclockwise and clockwise fashion, respectively. Hence, the null for polar pattern 1700 spans 160-degrees from line 1718 to line 1730, measured in a counterclockwise fashion.

FIG. 18 shows an exemplary polar pattern 1800 for a cardioid microphone. The acceptance angle for polar pattern 1800 spans 120-degrees, measured in a counterclockwise fashion from line 1805 to line 1808. Polar pattern 1800 has a single null 1860 located 180-degrees from upward-pointing vertical axis 1810.

FIG. 19 shows an exemplary polar pattern 1900 for a hypercardioid microphone. The acceptance angle for polar pattern 1900 spans 100-degrees, measured in a counterclockwise fashion from line 1905 to line 1908. Polar pattern 1900 has a first null 1920 and a second null 1930. First null 1920 and second null 1930 are each 110-degrees from upward-pointing vertical axis 1910, as measured in a counterclockwise and clockwise fashion, respectively.

FIG. 20 shows an exemplary polar pattern 2000 for a line microphone. The acceptance angle for polar pattern 2000 spans 90-degrees, measured in a counterclockwise fashion from line 2005 to line 2008. Polar pattern 2000 has a first null 2020 and a second null 2030. First null 2020 and second null 2030 are each 120-degrees from upward-pointing vertical axis 2010, as measured in a counterclockwise and clockwise fashion, respectively.

A uni-directional microphone's ability to reject much of the sound that arrives from off-axis provides a greater working distance or "distance factor" than an omni-directional microphone. Table 1, below, sets forth the acceptance angle, null, and distance factor (DF) for exemplary microphones of differing types. As Table 1 shows, the DF for an exemplary cardioid microphone is 1.7 while the DF for an exemplary omni-directional microphone is 1.0. This means that if an omni-directional microphone is used in a uniformly noisy environment to pick up a desired sound that is 10 feet away, a cardioid microphone used at 17 feet away from the sound source should provide the same results in terms of the ratio of desired signal to ambient noise. Among the other exemplary microphone types listed in Table 1, the subcardioid microphone performs equally well at 12 feet, the hypercardioid at 20 feet, and the line at 25 feet.

**Table 1. Properties of Exemplary Microphones of Differing Types**

|  | Omni-directional | Subcardioid | Cardioid | Hypercardioid | Line |
|---|---|---|---|---|---|
| Acceptance Angle | — | 170° | 120° | 100° | 90° |
| Null | None | 100° | 180° | 110° | 120° |
| Distance Factor (DF) | 1.0 | 1.2 | 1.7 | 2.0 | 2.5 |

VIII. Microphone Arrays

A wireless telephone in accordance with an embodiment of the present invention can include at least one microphone array. As will be described in more detail below, a microphone array includes a plurality of microphones that are coupled to a digital signal processor (DSP). The DSP can be configured to adaptively combined the audio signals output by the microphones in the microphone array to effectively adjust the sensitivity of the microphone array to pick up sound waves originating from a particular direction. Some of the information provided below on microphone arrays was found on the following website: <http://www.idiap.ch/~mccowan/arrays/tutorial.pdf>.

In a similar manner to uni-directional microphones, a microphone array can be used to enhance the pick up of sound originating from a particular direction, while tending to reject sound that arrives from other directions. Like uni-directional microphones, the sensitivity of a microphone array can be represented by a polar pattern or a directivity pattern. However, unlike uni-directional microphones, the direction in which a microphone array is most sensitive is not fixed. Rather, it can be dynamically adjusted. That is, the orientation of the main lobe of a polar pattern or directivity pattern of a microphone array can be dynamically adjusted.

A. Background on Microphone Arrays

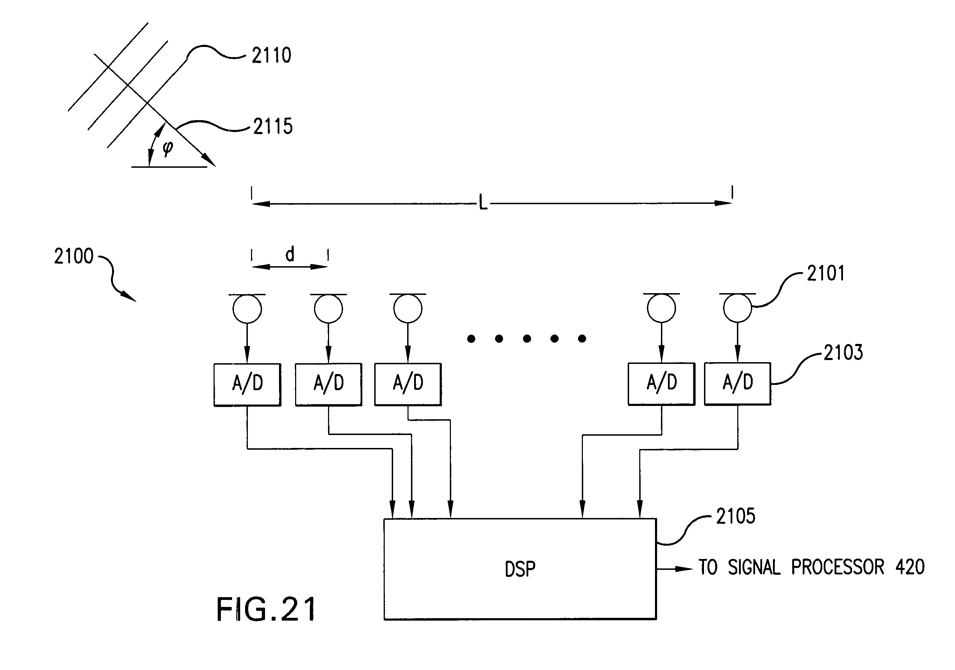

FIG. 21 is a representation of an example microphone array 2100 in accordance with an embodiment of the present invention. Microphone array 2100 includes a plurality of microphones 2101, a plurality of A/D converters 2103 and a digital signal processor (DSP) 2105. Microphones 2101 function to convert a sound wave impinging thereon into audio output signals, in like manner to conventional microphones. A/D converters 2103 receive the analog audio output signals from microphones 2101 and convert these signals to digital form in a manner well-known in the relevant art(s). DSP 2105 receives and combines the digital signals from A/D converters 2103 in a manner to be described below.

Also included in FIG. 21 are characteristic dimensions of microphone array 2100. In an embodiment, microphones 2101 in microphone array 2100 are approximately evenly spaced apart by a distance d. The distance between the first and last microphone in microphone array 2100 is designated as L. The following relationship is satisfied by characteristic dimensions L and d:

$$L = (N - 1)d, \qquad\qquad Eq. (1)$$

where N is the number of microphones in the array.

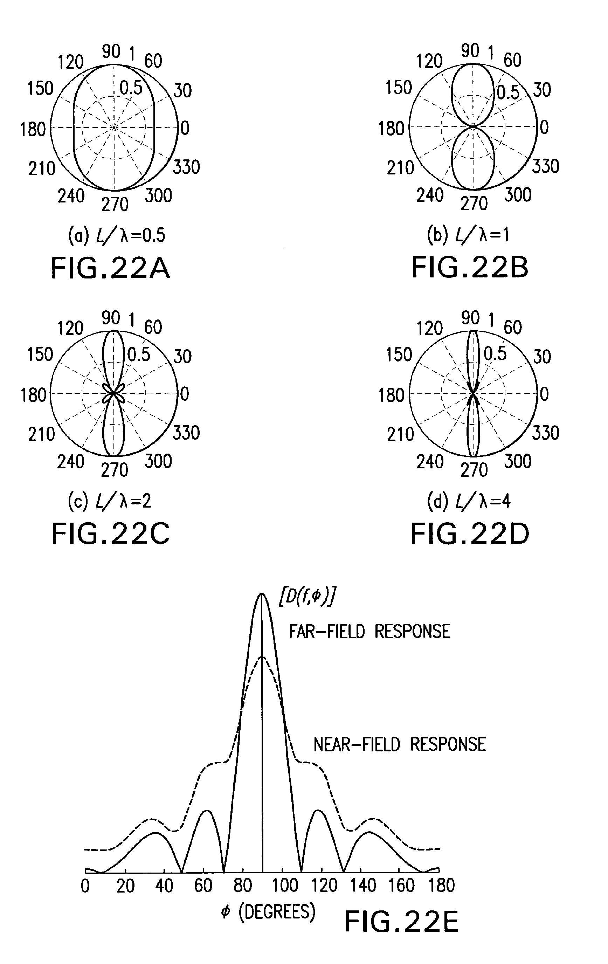

Characteristic dimensions d and/or L impact the response of microphone array 2100. More particularly, the ratio of the total length of microphones 2101 to the wavelength of the impinging sound (i.e., $L/\lambda$) affects the response of microphone array 2100. For example, FIGS. 22A-D show the polar patterns of a microphone array having different values of $L/\lambda$, demonstrating the impact that this ratio has on the microphone array's response.

As can be seen from FIGS. 22A-D, similar to uni-directional microphones, a microphone array has directional properties. In other words, the response of a microphone array to a particular sound source is dependent on the direction of arrival (DOA) of the sound waves emanating from the sound source in relation to the microphone array. The DOA of a sound wave can be understood by referring to FIG. 21. In FIG. 21, sound waves emanating from a sound source are approximated (using the far-field approximation described below) by a set of parallel wavefronts 2110 that propagate toward microphone array 2100 in a direction indicated by arrow 2115. The DOA of parallel wavefronts 2110 can be defined as an angle $\varphi$ that arrow 2115 makes with the axis along which microphones 2101 lie, as shown in the figure.

In addition to the DOA of a sound wave, the response of a microphone array is affected by the distance a sound source is from the array. Sound waves impinging upon a microphone array can be classified according to a distance, r, these sound waves traveled in relation to the characteristic dimension L and the wavelength of the sound $\lambda$. In particular, if r is greater than $2L^2/\lambda$, then the sound source is classified as a far-field source and the curvature of the wavefronts of the sound waves impinging upon the microphone array can be neglected. If r is not greater than $2L^2/\lambda$, then the sound source is classified as a near-field source and the curvature of the wavefronts can not be neglected.

FIG. 22E shows an exemplary directivity pattern illustrating the response of a microphone array for a near-field source (dotted line) and a far-field source (solid line). In the directivity pattern, the array's response is plotted on the vertical axis and the angular dependence is plotted on the horizontal axis.

In a similar manner to uni-directional microphones, a maximum and a minimum sensitivity angle can be defined for a microphone array. A maximum sensitivity angle of a microphone array is defined as an angle within which a sensitivity of the microphone array is above a predetermined threshold. A minimum sensitivity angle of a microphone array is defined as an angle within which a sensitivity of the microphone array is below a predetermined threshold.

B. Examples of Steering a Response of a Microphone Array

As mentioned above, DSP 2105 of microphone array 2100 can be configured to combine the audio output signals received from microphones 2101 (in a manner to be described presently) to effectively steer the directivity pattern of microphone array 2100.

In general, DSP 2105 receives N audio signals and produces a single audio output signal, where again N is the number of microphones in the microphone array 2100. Each of the N audio signals received by DSP 2105 can be multiplied by a weight factor, having a magnitude and phase, to produce N products of audio signals and weight factors. DSP 2105 can then produce a single audio output signal from the collection of received audio signals by summing the N products of audio signals and weight factors.

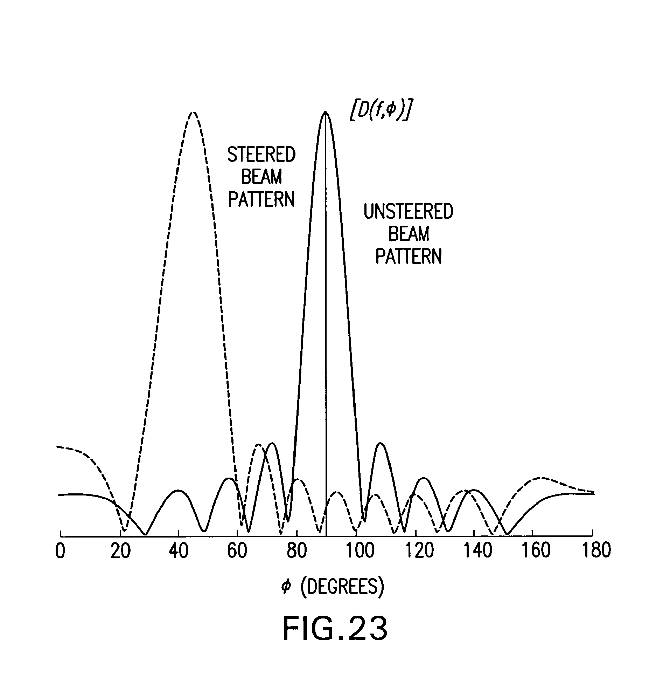

By modifying the weight factors before summing the products, DSP 2105 can alter the directivity pattern of microphone array 2100. Various techniques, called beamforming techniques, exist for modifying the weight factors in particular ways. For example, by modifying the amplitude of the weight factors before summing, DSP 2105 can modify the shape of a directivity pattern. As another example, by modifying the phase of the weight factors before summing, DSP 2105 can control the angular location of a main lobe of a directivity pattern of microphone array 2100. FIG. 23 illustrates an example in which the directivity pattern of a microphone array is steered by modifying the phases of the weight factors before summing. As can be seen from FIG. 23, in this example, the main lobe of the directivity pattern is shifted by approximately 45 degrees.

As is well-known in the relevant art(s), beamforming techniques can be non-adaptive or adaptive. Non-adaptive beamforming techniques are not dependent on the data. In other words, non-adaptive beamforming techniques apply the same algorithm regardless of the incoming sound waves and resulting audio signals. In contrast, adaptive beamforming techniques are dependent on the data. Accordingly, adaptive beamforming techniques can be used to adaptively determine a DOA of a sound source and effectively steer the main lobe of a directivity pattern of a microphone array in the DOA of the sound source. Example adaptive beamforming techniques include, but are not limited to, Frost's algorithm, linearly constrained minimum variance algorithms, generalized sidelobe canceller algorithms, or the like.

It is to be appreciated that FIG. 21 is shown for illustrative purposes only, and not limitation. For example, microphones 2101 need not be evenly spaced apart. In addition, microphone array 2100 is shown as a one-dimensional array; however two-dimensional arrays are contemplated within the scope of the present invention. As a person having ordinary skill in the art knows, two-dimensional microphone arrays can be used to determine a DOA of a sound source with respect to two distinct dimensions. In contrast, a one-dimensional array can only detect the DOA with respect to one dimension.

IX. Embodiments Implementing Microphone Arrays

In embodiments to be described below, microphone 201 and/or microphone 202 of wireless telephone 200 (FIGS. 2 and 3) can be replaced with a microphone array, similar to microphone array 2100 shown in FIG. 21.

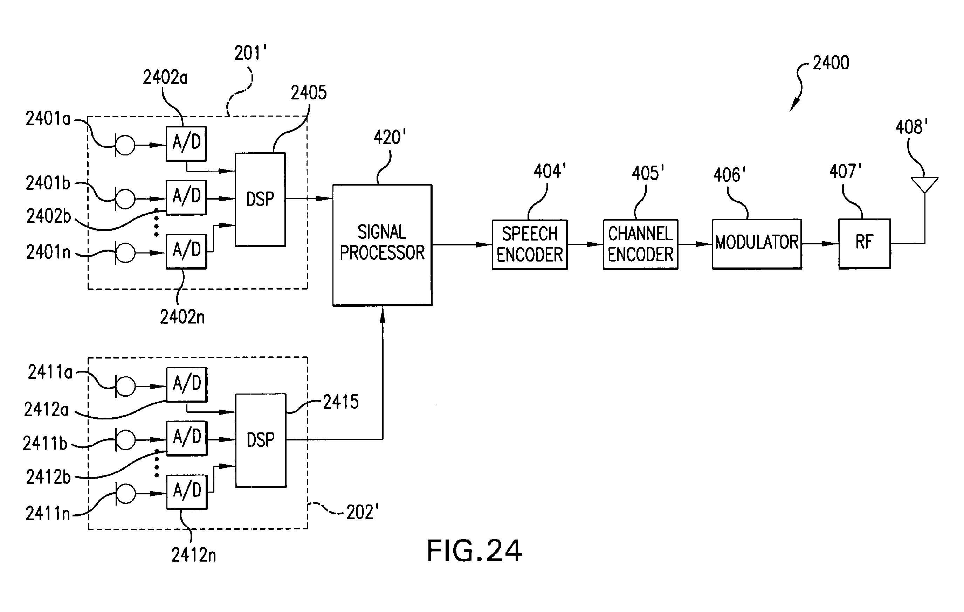

FIG. 24 is an example transmit path 2400 of a wireless telephone implemented with a first microphone array 201' and a second microphone array 202'. First microphone array 201' and second microphone array 202' function in like manner to exemplary microphone array 2100 (FIG. 21) described above. In particular, microphones 2401 a-n and 2411 a-n function to convert sound waves impinging thereon into audio signals. A/D converters 2402a-n and 2412a-n function to convert the analog audio signals received from microphones 2401a-n and 2411a-n, respectively, into digital audio signals. DSP 2405 receives the digital audio signals from A/D converters 2402a-n and combines them to produce a first audio output signal that is sent to signal processor 420'. Similarly, DSP 2415 receives the digital audio signals from A/D converters 2412a-n and combines them to produce a second audio output signal that is sent to signal processor 420'.

The remaining components in transmit path 2400 (namely, signal processor 420', speech encoder 404', channel encoder 405', modulator 406', RF module 407' and antenna 408') function in substantially the same manner as the corresponding components discussed with reference to FIG. 4. Accordingly, the functionality of the remaining components is not discussed further.

In an embodiment of the present invention, DSP 2405, using adaptive beamforming techniques, determines a DOA of a voice of a user of a wireless telephone based on the digital audio signals received from A/D converters 2402a-n. DSP 2405 then adaptively combines the digital audio signals to effectively steer a maximum sensitivity angle of microphone array 201' so that the mouth of the user is within the maximum sensitivity angle. In this way, the single audio signal output by DSP 2405 will tend to include a cleaner version of the user's voice, as compared to an audio signal output from a single microphone (e.g., microphone 201). The audio signal output by DSP 2405 is then received by signal processor 420' and processed in like manner to the audio signal output by microphone 201 (FIG. 4), which is described in detail above.

In another embodiment of the present invention, DSP 2415 receives the digital audio signals from A/D converters 2412a-n and, using adaptive beamforming techniques, determines a DOA of a voice of a user of the wireless telephone based on the digital audio signals. DSP 2415 then adaptively combines the digital audio signals to effectively steer a minimum sensitivity angle of microphone array 202' so that the mouth of the user is within the minimum sensitivity angle. In this way, the single audio signal output by DSP 2415 will tend to not include the user's voice; hence the output of DSP 2415 will tend to include a purer version of background noise, as compared to an audio signal output from a single microphone (e.g., microphone 202). The audio signal output by DSP 2415 is then received by signal processor 420' and processed in like manner to the audio signal output by microphone 202 (FIG. 4), which is described in detail above.

In most situations background noise is non-directional—it is substantially the same in all directions. However, in some situations a single noise source (e.g., a jackhammer or ambulance) accounts for a majority of the background noise. In these situations, the background noise is highly directional. In an embodiment of the invention, DSP 2405 is configured to determine a DOA of a highly directional background noise source. DSP 2405 is further configured to adaptively combine the digital audio signals to effectively steer a minimum sensitivity angle of microphone array 201' so that the highly directional background noise source is within the minimum sensitivity angle. In this way, microphone array 201' will tend to reject sound originating from the DOA of the highly directional background noise source. Hence, microphone array 201' will consequently pick up a purer version of a user's voice, as compared to a single microphone (e.g., microphone 201).

In another embodiment, DSP 2415 is configured to determine a DOA of a highly directional background noise source. DSP 2415 is further configured to adaptively combine the digital audio signals from A/D converters 2412a-n to effectively steer a maximum sensitivity angle of microphone array 202' so that the highly directional background noise source is within the maximum sensitivity angle. In this way, microphone array 202' will tend to pick-up sound originating from the DOA of the highly directional background noise source. Hence, microphone array 202' will consequently pick up a purer version of the highly directional background noise, as compared to a single microphone (e.g., microphone 202).

In a further embodiment (not shown), a wireless telephone includes a first and second microphone array and a VAD. In this embodiment, a DSP is configured to determine a DOA of a highly directional background noise and a DOA of a user's voice. In addition, in a similar fashion to that described above, the VAD detects time intervals in which a voice component is present in the audio signal output by the first microphone array. During time intervals in which a voice signal is present in the audio signal output from the first microphone array, a DSP associated with the second microphone array adaptively steers a minimum sensitivity angle of the second microphone array so that the mouth of the user is within the minimum sensitivity angle. During time intervals in which a voice signal is not present in the audio signal output from the first microphone array, a DSP associated with the second microphone array adaptively steers a maximum sensitivity angle of the second microphone array so that the highly directional background noise source is within the maximum sensitivity angle. In other words, the second microphone array, with the help of the VAD, adaptively switches between the following: (i) rejecting the user's voice during time intervals in which the user is talking; and (ii) preferentially picking up a highly directional background noise sound during time intervals in which the user is not talking. In this way, the second microphone array can pick up a purer version of background noise as compared to a single microphone.

It is to be appreciated that the embodiments described above are meant for illustrative purposes only, and not limitation. In particular, it is to be appreciated that the term "digital signal processor," "signal processor" or "DSP" used above and below can mean a single DSP, multiple DSPs, a single DSP algorithm, multiple DSP algorithms, or combinations thereof. For example, DSP 2405, DSP 2415 and/or signal processor 420' (FIG. 24) can represent different DSP algorithms that function within a single DSP. Additionally or alternatively, various combinations of DSP 2405, DSP 2415 and/or signal processor 420' can be implemented in a single DSP or multiple DSPs as is known by a person skilled in the relevant art(s).

X. Multiple Description Transmission System In Accordance With An Embodiment Of The Present Invention

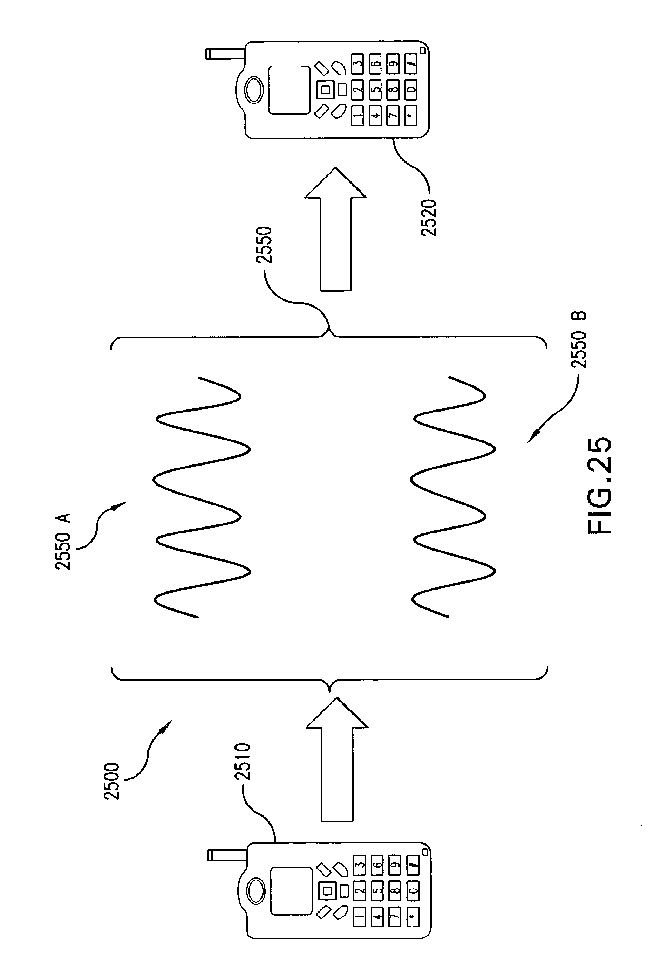

FIG. 25 illustrates a multiple description transmission system 2500 that provides redundancy to combat transmission channel impairments in accordance with embodiments of the present invention. Multiple description transmission system 2500 includes a first wireless telephone 2510 and a second wireless telephone 2520. First wireless telephone 2510 transmits multiple versions 2550 of a voice signal to second wireless telephone 2520.

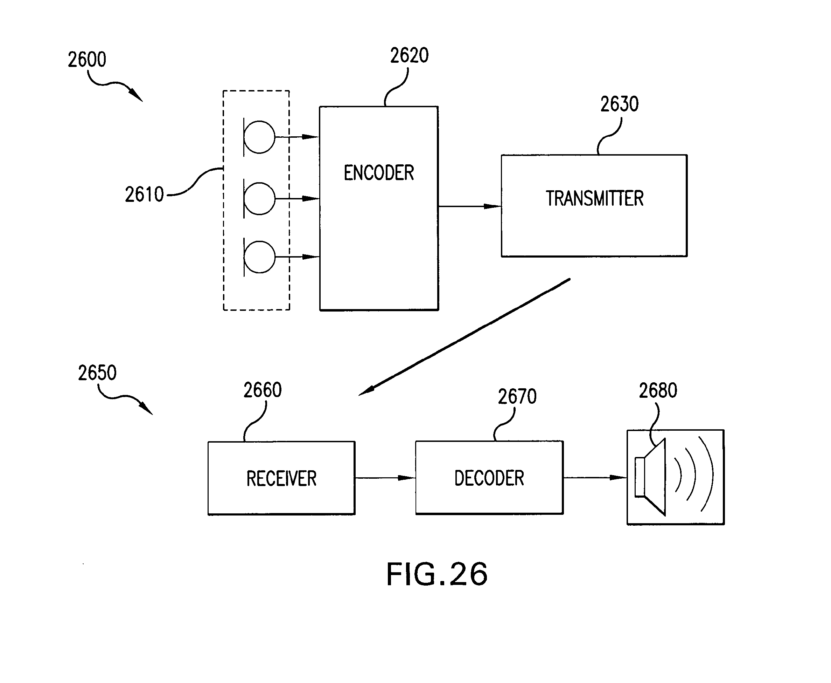

FIG. 26 is a functional block diagram illustrating an example transmit path 2600 of first wireless telephone 2510 and an example receive path 2650 of second wireless telephone 2520. As shown in FIG. 26, first wireless telephone 2510 comprises an array of microphones 2610, an encoder 2620, and a transmitter 2630. Each microphone in microphone array 2610 is configured to receive voice input from a user (in the form of a sound pressure wave) and to produce a voice signal corresponding thereto. Microphone array 2610 can be, for example, substantially the same as microphone array 2100 (FIG. 21). Encoder 2620 is coupled to microphone array 2610 and configured to encode each of the voice signals. Encoder 2620 can include, for example, a speech encoder and channel encoder similar to speech encoder 404 and channel encoder 405, respectively, which are each described above with reference to FIG. 4. Additionally, encoder 2620 may optionally include a DSP, similar to DSP 420 (FIG. 4).

Transmitter 2630 is coupled to encoder 2620 and configured to transmit each of the encoded voice signals. For example, FIG. 25 conceptually illustrates an example multiple description transmission system. In FIG. 25, first wireless telephone 2510 transmits a first signal 2550A and a second signal 2550B to second wireless telephone 2520. It is to be appreciated, however, that first wireless telephone 2510 can transmit more than two signals (e.g., three, four, five, etc.) to second wireless telephone 2520. Transmitter 2630 of first wireless telephone 2510 can include, for example, a modulator, an RF module, and an antenna similar to modulator 406, RF module 407, and antenna 408, respectively, which, as described above with reference to FIG. 4, collectively function to transmit encoded voice signals.

In alternative embodiments, first wireless telephone 2510 can include multiple encoders and transmitters. For instance, first wireless telephone 2510 can include multiple transmit paths similar to transmit path 100 (FIG. 1A), where each transmit path corresponds to a single microphone of microphone array 2610 of first wireless telephone 2510.

As shown in receive path 2650 of FIG. 26, second wireless telephone 2520 comprises a receiver 2660, a decoder 2670, and a speaker 2680. Receiver 2660 is configured to receive transmitted signals 2550 (FIG. 25). For example, receiver 2660 can include an antenna, an RF module, and a demodulator similar to antenna 128, RF module 127, and demodulator 126, respectively, which, as described above with reference to FIG. 1B, collectively function to receive transmitted signals. Decoder 2670 is coupled to receiver 2660 and configured to decode the signals received by receiver 2660, thereby producing an output signal. For example, decoder 2670 can include a channel decoder and speech decoder similar to channel decoder 125 and speech decoder 124, respectively, which, as described above with reference to FIG. 1B, collectively function to decode a received signal. Additionally, decoder 2670 may optionally include a DSP. Speaker 2680 receives the output signal from decoder 2670 and produces a pressure sound wave corresponding thereto. For example, speaker 2680 can be similar to speaker 129 (FIG. 1B). Additionally, a power amplifier (not shown) can be included before speaker 2680 (or speaker 129) to amplify the output signal before it is sent to speaker 2680 (speaker 129) as would be apparent to a person skilled in the relevant art(s).

In a first embodiment of the present invention, decoder 2670 is further configured to perform two functions: (i) time-align the signals received by receiver 2660, and (ii) combine the time-aligned signals to produce the output signal. As is apparent from FIG. 21, due to the spatial separation of the microphones in a microphone array, a sound wave emanating from the mouth of a user may impinge upon each microphone in the array at different times. For example, with reference to FIG. 21, parallel wave fronts 2110 will impinge upon the left-most microphone of microphone array 2100 before it impinges upon the microphone separated by a distance d from the left-most microphone. Since there can be a time-delay with respect to when the sound waves impinge upon the respective microphones in microphone array 2610, there will be a corresponding time-delay with respect to the audio signals output by the respective microphones. Decoder 2670 of second wireless telephone 2520 can compensate for this time-delay by time-aligning the audio signals.

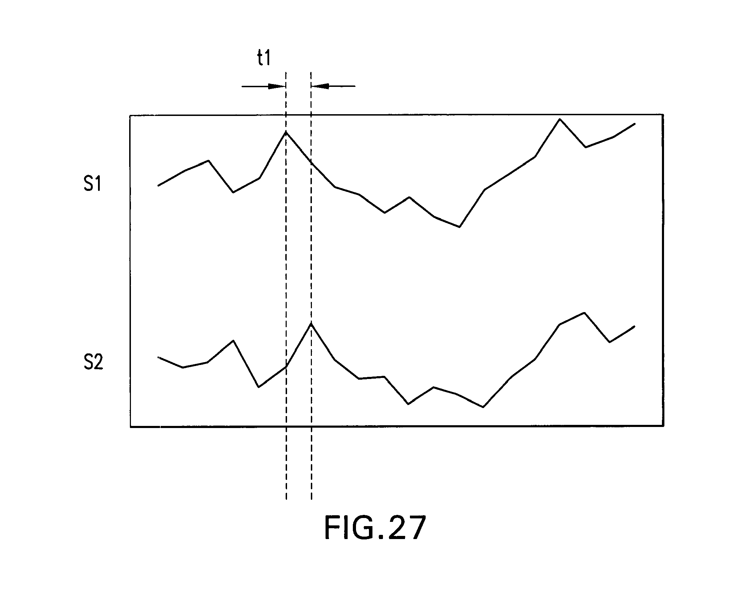

For example, FIG. 27 shows a first audio signal S 1 and a second audio signal S2 corresponding to the output of a first and second microphone, respectively, of first wireless telephone 2510. Due to the relative location of the microphones on first wireless telephone 2510, second audio signal S2 is time-delayed by an amount t1 compared to first audio signal S1. Decoder 2670 of second wireless telephone 2520 can be configured to time-align first audio signal S1 and second audio signal S2, for example, by time-delaying first audio signal S1 by an amount equal to t1.

As mentioned above, according to the first embodiment, decoder 2670 of second wireless telephone 2520 is further configured to combine the time-aligned audio signals. Since the respective voice components of first audio signal S1 and second audio signal S2 are presumably nearly identical but the respective noise components in each audio signal are not, the voice components will tend to add-up in phase, whereas the noise components, in general, will not. In this way, by combining the audio signals after time-alignment, the combined output signal will have a higher signal-to-noise ratio than either first audio signal S 1 or second audio signal S2.

In a second embodiment of the present invention, decoder 2670 of second wireless telephone 2520 is configured to perform the following functions. First, decoder 2670 is configured to detect a direction of arrival (DOA) of a sound wave emanating from the mouth of a user of first wireless telephone 2510 based on transmitted signals 2550 received by receiver 2660 of second wireless telephone 2520. Decoder 2670 can determine the DOA of the sound wave in a similar manner to that described above with reference to FIGS. 21 through 24.

Second, decoder 2670, which as mentioned above may optionally include a DSP, is configured to adaptively combine the received signals based on the DOA to produce the output signal. By adaptively combining the received signals based on the DOA, decoder 2670 of second wireless telephone 2520 can effectively steer a maximum sensitivity angle of microphone array 2610 of first wireless telephone 2510 so that the mouth of the user of first wireless telephone 2510 is within the maximum sensitivity angle. As defined above, the maximum sensitivity angle is an angle within which a sensitivity of microphone array 2610 is above a threshold.

In a third embodiment of the present invention, for each voice frame of the signals received by receiver 2660, decoder 2670 of second wireless telephone 2520 is configured to perform the following functions. First, decoder 2670 is configured to estimate channel impairments (e.g., bit errors and frame loss). That is, decoder 2670 is configured to determine the degree of channel impairments for each voice frame of the received signals. For example, for a given frame, decoder 2670 can estimate whether the channel impairments exceed a threshold. The estimate can be based on signal-to-noise ratio (S/N) or carrier-to-interference ratio (C/I) of a channel, the bit error rate, block error rate, frame error rate, and or the like. Second, decoder 2670 is configured to decode a received signal with the least channel impairments, thereby producing the output signal for the respective voice frames.

By adaptively decoding the signal with the least channel impairments for the respective voice frames, decoder 2670 is configured to decode the best signal for a given time. That is, at different times the multiple versions 2550 of the voice signal transmitted by first wireless telephone 2510 may be subject to different channel impairments. For example, for a given voice frame, first signal 2550A may have less channel impairments than second signal 2550B. During this voice frame, decoding first signal 2550A may lead to a cleaner and better quality voice signal. However, during a subsequent voice frame, first signal 2550A may have more channel impairments than second signal 2550B. During this subsequent voice frame, decoding second signal 2550B may lead to a cleaner and better quality voice signal.

In a fourth embodiment of the present invention, for each voice frame of the signals received by receiver 2660, decoder 2670 is configured to estimate channel impairments and dynamically discard those received signals having a channel impairment worse than a threshold. Then, decoder 2670 is further configured to combine the non-discarded received signals according to either the first or second embodiment described above. That is, decoder 2670 can be configured to time-align and combine the non-discarded received signals in accordance with the first embodiment. Alternatively, decoder 2670 can be configured to combine the non-discarded received signals to effectively steer microphone array 2610 of first wireless telephone 2510 in accordance with the second embodiment.

In a fifth embodiment of the present invention, encoder 2620 of first wireless telephone 2510 is configured to encode the voice signals at different bit rates. For example, encoder 2620 can be configured to encode one of the voice signals at a first bit rate ("a main channel") and each of the other voice signals at a bit rate different from the first bit rate ("auxiliary channels"). The main channel can be encoded and transmitted, for example, at the same bit rate as a conventional single-channel wireless telephone (e.g., 22 kilobits per second); whereas the auxiliary channels can be encoded and transmitted, for example, at a bit rate lower than a conventional single-channel wireless telephone (e.g., 8 kilobits per second or 4 kilobits per second). In addition, different ones of the auxiliary channels can be encoded and transmitted at different bit rates. For example, a first of the auxiliary channels can be encoded and transmitted at 8 kilobits per second; whereas a second and third auxiliary channel can be encoded and transmitted at 4 kilobits per second. Decoder 2670 of second wireless telephone 2520 then decodes the main and auxiliary channels according to one of the following two examples.

In a first example, for each voice frame of the transmitted signals, decoder 2670 of second wireless telephone 2520 is configured to estimate channel impairments. A channel is corrupted if the estimated channel impairments for that channel exceed a threshold. If (i) the main channel is corrupted by channel impairments, and if (ii) at least one of the auxiliary channels is not corrupted by channel impairments, then the decoder is configured to decode one of the auxiliary channels to produce the output signal.

In a second example, decoder 2670 uses the main channel and one of the auxiliary channels to improve the performance of a frame erasure concealment algorithm. Frame erasure occurs if the degree of channel impairments in a given voice frame exceeds a predetermined threshold. Rather than output no signal during a voice frame that has been erased, which would result in no sound during that voice frame, some decoders employ a frame erasure concealment algorithm to conceal the occurrence of an erased frame. A frame erasure concealment algorithm attempts to fill the gap in sound by extrapolating a waveform for the erased frame based on the waveform that occurred before the erased frame. Some frame erasure concealment algorithms use the side information (e.g., predictor coefficients, pitch period, gain, etc.) to guide the waveform extrapolation in order to successfully conceal erased frames. An example frame erasure concealment algorithm is disclosed in U.S. Patent Application No. 10/968,300 to Thyssen et al., entitled "Method For Packet Loss And/Or Frame Erasure Concealment In A Voice Communication System," filed October 20, 2004, the entirety of which is incorporated by reference herein.

In this second example, for each voice frame of the transmitted signals, decoder 2670 is configured to estimate channel impairments. If (i) the side information of the main channel is corrupted, and if (ii) the corresponding side information of at least some of the auxiliary channels channel is not corrupted, then decoder 2670 is configured to use both the main channel and one of the auxiliary channels to improve performance of a frame erasure concealment algorithm in the production of the output signal. By using uncorrupted side information from one of the auxiliary channels, the frame erasure concealment algorithm can more effectively conceal an erased frame.

XI. Improved Performance Of A Telephone Used In Speaker-Phone Mode

As mentioned above, a telephone equipped with multiple microphones in accordance with an embodiment of the present invention can provide improved performance during operation of the telephone in a speaker-phone mode. In a first embodiment, the multiple microphones can be used to improve detection of voice activity, which in turn, can improve the performance of an echo canceller. In a second embodiment, the multiple microphones can be configured as an adaptive microphone array and used to reduce the effects of room reverberation and/or acoustic echo.

The description below is presented from the perspective of a near-end telephone used in a speaker-phone mode. This is for illustrative purposes only, and not limitation. It will be apparent to a person skilled in the relevant art (s) from the description contained herein how to implement the present invention in a telephone.

A. First Embodiment

Before describing a first embodiment of the present invention, it is helpful to describe an example of acoustic echo that occurs when a telephone is used in a speaker-phone mode.

When used in a speaker-phone mode, a loudspeaker of a near-end telephone emits a sound pressure wave corresponding to the voice of a far-end user. This sound pressure wave allows the near-end user to hear the far-end user's voice. However, this sound pressure wave can also be picked-up by a microphone of the near-end telephone. In this way, the near-end telephone can transmit the far-end user's voice back to the far-end user in the form of an echo.

To reduce such an echo transmitted by the near-end telephone, an acoustic echo canceller (AEC) can be used. An echo canceller can potentially reduce the volume of an echo to make it less annoying and/or distracting. An echo canceller in accordance with an embodiment of the present invention can achieve improved echo cancellation compared to a conventional echo canceller using only a single microphone's output signal.

It should be noted that while the acoustic echo problem is more severe when a telephone is used in a speaker-phone mode, this echo problem is not limited to the speaker-phone mode. In some telephone handsets or Bluetooth headsets, the sound emitted by the loudspeaker may also be picked up by the microphone in the same handset or headset. Thus, the acoustic echo can also be a problem for telephone handsets or headsets. The present invention can also be used to reduce acoustic echo in telephone handsets and headsets.

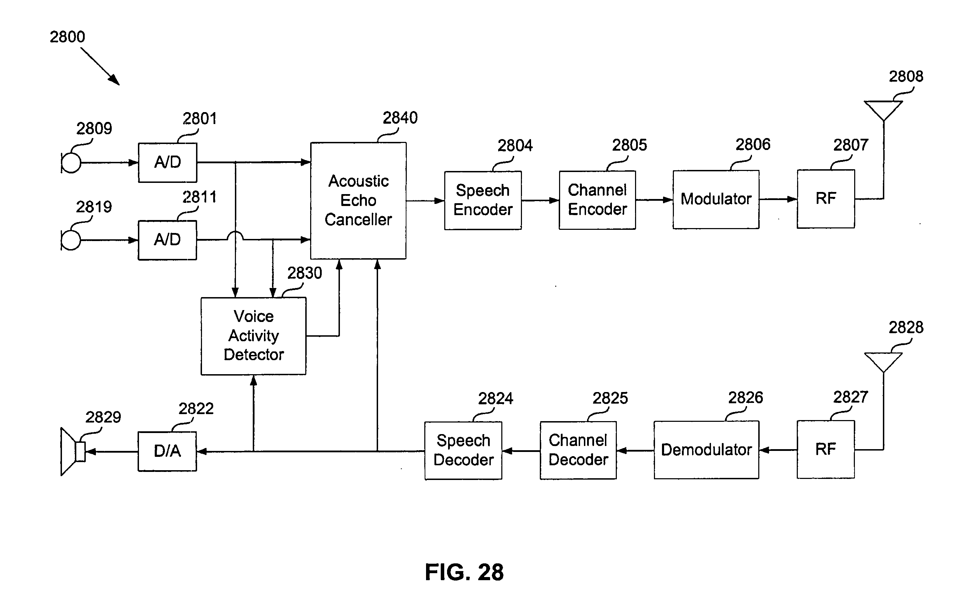

As an example for the first embodiment of the present invention, FIG. 28 shows a simplified functional block diagram 2800 of a wireless telephone in which improved echo cancellation can be achieved in accordance with the present invention. Functional block diagram 2800 includes a transmission path and a receiving path. The transmission path, which transmits the near-end telephone user's voice, includes a first microphone 2809 with an associated A/D converter 2801, a second microphone 2819 with an associated A/D converter 2811, an acoustic echo canceller 2840, a speech encoder 2804, a channel encoder 2805, a modulator 2806, an RF module 2807, and an antenna 2808. The receiving path, which receives, decodes, and plays back the far-end telephone user's voice, includes an antenna 2828 (which can be shared with the transmitting antenna 2808), an RF module 2827, a demodulator 2826, a channel decoder 2825, a speech decoder 2824, a D/A converter 2822, and a loudspeaker 2829. With the exception of the voice activity detector (VAD) 2830 and the acoustic echo canceller (AEC) 2840, the other functional modules in FIG. 28 are similar to their like-numbered counterparts in FIG. 1A and FIG. 1B.

In a conventional single-microphone telephone, the second microphone 2819 and its associated A/D converter 2811 are not present. In such a conventional configuration, the acoustic echo canceller 2840 takes the far-end telephone user's voice signal at the output of the speech decoder 2824, passes it through an adaptive filter, and subtracts the adaptive filter output signal from the output signal of the A/D converter 2801. This adaptive filter and the subtraction unit are inside the acoustic echo canceller 2840 and not shown in FIG. 28. This adaptive filter models the transfer function of the echo path from the output of the speech decoder 2824 to the output of the A/D converter 2801 (that is, the input to the acoustic echo canceller 2840). Therefore, the output signal of this adaptive filter is an approximation of the acoustic echo signal. Subtracting this adaptive filter output signal thus cancels the acoustic echo to a large extent.

Usually filter coefficients of this adaptive filter are updated (adapted) only when the far-end telephone user is talking and the near-end telephone user is not talking. At other times the filter coefficients are generally frozen and not updated - this is to avoid potential divergence of the filter coefficients. The voice activity detector (VAD) 2830 performs voice activity detection in a more general sense than a conventional VAD. Specifically, it examines the far-end audio signal as well as the near-end audio signal to identify when the far-end user is talking, when the near-end user is talking, when both users are talking, and so on. The VAD 2830 then feeds the identification to the acoustic echo canceller 2840 so it can determine when to update the coefficients of the adaptive filter. Strictly speaking, the voice activity detector 2830 is traditionally considered as part of the acoustic echo canceller 2840. Here in FIG. 28 it is separated drawn for the convenience of discussion.

Now with the first embodiment of the present invention, the second microphone 2819 and its associated A/D converter 2811 are present in FIG. 28. In this case, the VAD 2830 can make use of the second near-end audio signal picked up by the second microphone 2819 to improve its detection accuracy and better identify whether to update the adaptive filter coefficients in the acoustic echo canceller 2840. This results in improved echo cancellation performance.

In a manner similar to that described above with reference to FIG. 13, the VAD 2830 can use the output signals of both the first microphone 2809 and the second microphone 2819 to improve the accuracy of voice activity detection, which in turn can improve echo cancellation. Here the main difference from the description with reference to FIG. 13 is that rather than using the second microphone to pick up more acoustic background noise than the first microphone, now the second microphone is used to pick up more echo than the first microphone. This can easily be achieved for a wireless telephone in the speaker-phone mode.

When used in the speaker-phone mode, many of the present-day wireless telephones mute the primary loudspeaker 203 on the front side of the telephone (FIG. 2) and instead play back the far-end telephone user's voice from a second loudspeaker located on the back side of the telephone. This is done to reduce the acoustic coupling between the loudspeaker and the microphone so as to reduce the acoustic echo. This second loudspeaker is often placed at a location slightly below the second microphone 202 shown in FIG. 3. In this case, the second microphone is very close to this second loudspeaker, thus it is in an ideal location to pick up a strong acoustic echo signal of the far-end user from the second loudspeaker on the back side of the telephone. By using this strong pick up of the acoustic echo signal in addition to the primary near-end audio signal picked up by the first microphone 2809, the VAD 2830 can determine more accurately the time period when the near-end user is talking. This in turn will enable the echo canceller 2840 to adapt the coefficients of the adaptive filter at the right time, thus resulting in more accurate coefficients and better echo cancellation performance.

Just as it is not easy to detect voice activity accurately in high background noise level, it is also not easy to detect the near-end user's voice activity when the echo of the far-end user's voice is strong. (In fact, the latter scenario is probably more difficult than the former, because both the near-end user's voice and the echo are voice signals with somewhat similar properties, making it more difficult to distinguish the two than distinguishing voice from background noise as in the former scenario.)

Similarly, just as VAD 1320 in FIG. 13 can use the audio signal from the second microphone 202 to detect the voice activity more accurately, VAD 2830 can use the audio signal from the second microphone 2819 to detect the voice activity more accurately. It should be apparent to a person skilled in the relevant art(s) that the second audio signal picked up by the second microphone 2819 provides some additional clues about the voice activity that is not in the first audio signal picked up by the first microphone 2809, and therefore using this second audio signal in addition to the first audio signal should enable a VAD to detect the voice activity more accurately.

To illustrate this last point, consider the wireless telephone example discussed above where in the speakerphone mode the telephone uses a second loudspeaker located on the back side of the telephone near the second microphone. In this case, the first microphone 201 in the front (FIG. 2) mainly picks up the near-end user's voice, while the second microphone in the back (FIG. 3) mainly picks up the acoustic echo of the far-end user's voice that comes out of the second loudspeaker nearby. Therefore, when the near-end user is talking, the output signal of the first microphone has a relatively high power and the output signal of the second microphone has a relatively low power. However, the opposite is true when the near-end user is not talking but the far-end user is talking. Therefore, the power ratio between the first audio signal and the second audio signal carries useful information about the voice activities of the near-end user and the far-end user. In one exemplary embodiment of the present invention, this power ratio between the first audio signal and the second audio signal is used to identify time intervals in which the near-end user is speaking.

In the preceding discussion, the improved voice activity detector 2830 alone is able to improve the echo cancellation performance even if the acoustic echo canceller 2840 is a conventional one that does not make use of the second audio signal picked up by the second microphone 2819. To go one step further, in another exemplary embodiment of the present invention, the acoustic echo canceller 2840 further improves its performance by also making use of the second audio signal picked up by the second microphone 2819. In this case, in addition to performing adaptive filtering of the output signal of the speech decoder 2824, the acoustic echo canceller 2840 can also perform adaptive filtering on the second audio signal (output of the A/D converter 2811). The two adaptively filtered output signals can be combined and then the combined signal can be subtracted from the first near-end audio signal (output of the A/D converter 2801). Naturally, the coefficients of the two adaptive filters mentioned above need to be adapted in a jointly optimal way.

Using the second audio signal in the acoustic echo canceller 2840 has the advantage that the non-linearity in the echo path can be better accounted for. One of the biggest challenges facing the acoustic echo canceller for a speakerphone is that when the loudspeaker is driven to saturation, the loudspeaker output signal is clipped, which is a severe form of non-linearity. Since the conventional acoustic echo canceller only applies an adaptive linear filter to the output signal of the speech decoder 2824, which is generally not clipped, such an adaptive linear filter cannot model the non-linearity produced by a saturated loudspeaker. As a result, the estimated echo signal at the output of the adaptive linear filter will not be a good approximation of the echo signal at the output of the A/D converter 2801, and thus the echo cancellation performance will be very poor in this case.

Now, in this same scenario of saturated loudspeaker, the second near-end audio signal picked up by the second microphone located near the loudspeaker is predominantly the echo signal produced by the saturated loudspeaker when the far-end user is talking. This second audio signal already has the non-linear clipping, and thus the adaptive linear filter used to filter this second audio signal does not need to model this non-linearity and only needs to model the transfer function from the second microphone to the first microphone. As a result, the adaptively filtered version of this second near-end audio signal can be a much better approximation to the echo signal picked up by the first microphone 2809 than the adaptively filtered version of the far-end signal at the output of the speech decoder 2824. In fact, in this case of a saturated loudspeaker, the acoustic echo canceller 2840 can even use only this second near-end audio signal to estimate the echo signal and subtract such an estimated echo signal from the first audio signal during the time periods when only the far-end user is talking (assuming the voice activity detector 2830 can detect such time periods accurately). In this example, unlike a conventional acoustic echo canceller, the far-end signal at the output of the speech decoder 2824 is not used at all. This exemplary embodiment of the present invention demonstrates a way to alleviate the non-linearity problem by using the second near-end audio signal in the acoustic echo canceller 2840.

B. Second Embodiment

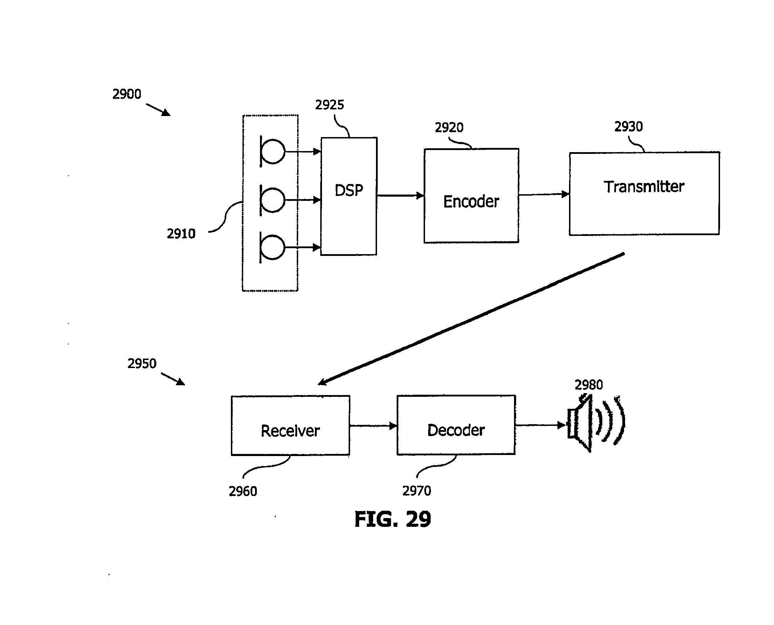

As mentioned above, in a second embodiment, the multiple microphones of the telephone can be configured as an adaptive microphone array and used to reduce the effects of room reverberation and/or acoustic echo. FIG. 29 is a functional block diagram of a transmit path 2900 and a receive path 2950 of a telephone in accordance with this second embodiment. Transmit path 2900 includes an array of microphones 2910 similar to microphone array 2100 of FIG. 21, a DSP 2925 similar to DSP 2105 of FIG. 21, an encoder 2920 similar to encoder 2620 of FIG. 26, and a transmitter 2930 similar to transmitter 2630 of FIG. 26. Receive path 2950 includes a receiver 2960 similar to receiver 2660 of FIG. 26, a decoder 2970 similar to decoder 2670 of FIG. 26, and a speaker 2980 similar to speaker 2680 of FIG. 26.

Each microphone in microphone array 2910 is configured to receive sound waves emanating from the surrounding environment and to generate an audio signal corresponding thereto. DSP 2925 receives the audio signals from microphone array 2910 and is configured to adaptively combine the audio signals to produce a first audio output signal. In this embodiment, microphone array 2910 and DSP 2925 are configured to reduce the adverse effects of (i) room reverberation, when a near-end user is speaking, and/or (ii) acoustic echo, when a far-end user is speaking.

The manner in which the room reverberation effect is reduced can be dependent upon whether the reflected sound waves are isotropic (i.e., substantially equal in all directions) or highly directional (i.e., coming from a particular direction). To reduce room reverberation when the reflected sound waves are isotropic, DSP 2925 is configured to detect a DOA of sound waves emanating from the mouth of a near-end user. The DOA is detected based on the audio signals received from microphone array 2910 in a manner similar to that described above with reference to FIGS. 21, 22A-E, 23, and 24.

DSP 2925 is further configured to adaptively combine the audio signals based on the DOA to produce the first audio output signal. For example, in a manner similar to that described above, DSP 2925 adaptively combines the audio signals based on the DOA to effectively steer a maximum sensitivity angle of microphone array 2910 so that the mouth of the near-end user is within the maximum sensitivity angle. The maximum sensitivity angle is defined as an angle within which a sensitivity of the microphone array is above a threshold. By steering the maximum sensitivity angle in this way, microphone array 2910 will tend to pick up the user's voice and not the reflected sound waves, thereby reducing the room reverberation effect.

As mentioned above, the reflected sound waves may be highly directional. That is, the near-end user's voice may be reflected off a particular object or set of objects (e.g., a wall or the like), and may therefore come back toward the telephone from a particular direction. To reduce room reverberation in this case, DSP 2925 is configured in an alternate embodiment to detect a DOA of sound waves corresponding to a reverberation of a voice of a near-end user and to adaptively combine the audio signals based on the DOA to produce the first audio output signal. In this example, DSP 2925 combines the audio signals based on the DOA to effectively steer a minimum sensitivity angle of microphone array 2910 so that a source of the reverberation of the voice of the near-end user is within the minimum sensitivity angle. The minimum sensitivity angle is defined as an angle within which a sensitivity of the microphone array is below a threshold. By steering the minimum sensitivity angle in this way, microphone array 2910 will tend not to pick-up the highly directional reflected sound waves, thereby reducing the room reverberation effect.

To reduce acoustic echo when a far-end user is speaking, DSP 2925 is configured to perform two functions. First, DSP 2925 is configured to detect a DOA of sound waves corresponding to the voice signal of the far-end user. These sound waves may come from the direction of speaker 2980 of the near-end telephone or from an object that reflects sound waves (e.g., a wall or the like). Second, DSP 2925 is configured to adaptively combine the audio signals based on the DOA to effectively steer a minimum sensitivity angle of microphone array 2910 so that a source of these sound waves is within the minimum sensitivity angle. As mentioned above, the source of these sound waves can be, for example, speaker 2980 or an object that reflects sound waves (e.g., a wall or the like).

C. Example Methods

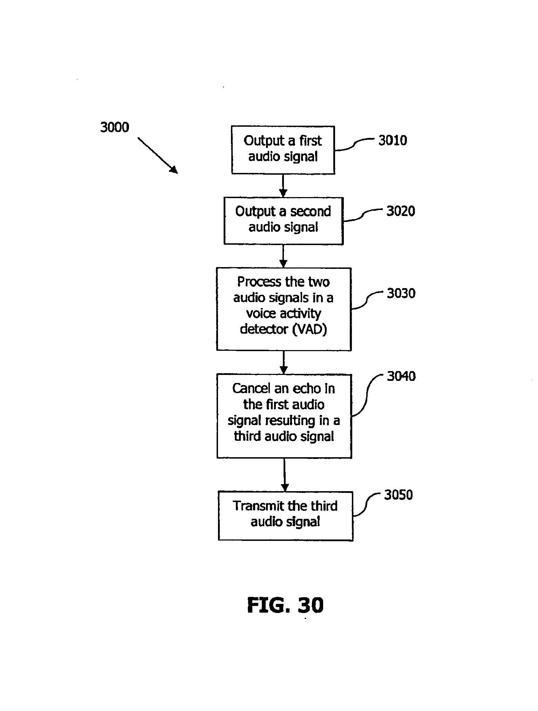

FIG. 30 is a flowchart 3000 depicting an example method for improving echo cancellation in a telephone having multiple microphones in accordance with an embodiment of the present invention. Flowchart 3000 begins at a step 3010 in which a first audio signal is output from a first microphone (e.g., microphone 2801 of FIG. 28). The first audio signal includes a voice component of a near-end user and a voice component of a far-end user. For example, the far-end user's voice component can be output by a loudspeaker of the near-end telephone when it is used in a speaker-phone mode.

In a step 3020, a second audio signal is output from a second microphone. For example, the second audio signal can be from second microphone 2802 (FIG. 28).

In a step 3030, the first and second audio signals are processed in a VAD to generate output relating to time intervals in which the near-end user's voice component is present in the first audio signal. The VAD can be, for example, VAD 2804 described above.

In a step 3040, the far-end user's voice component is cancelled from the first audio signal based on the content of (i) the first audio signal, (ii) the second audio signal, and (iii) the output from the VAD. The far-end user's voice can be canceled by echo canceller 2820 of FIG. 28. The cancellation of the far-end user's voice component results in a third audio signal.

In a step 3050, the third audio signal is transmitted to another telephone. The third audio signal can be transmitted in a similar manner to that described above, or as would otherwise be apparent to a person skilled in the relevant art(s).

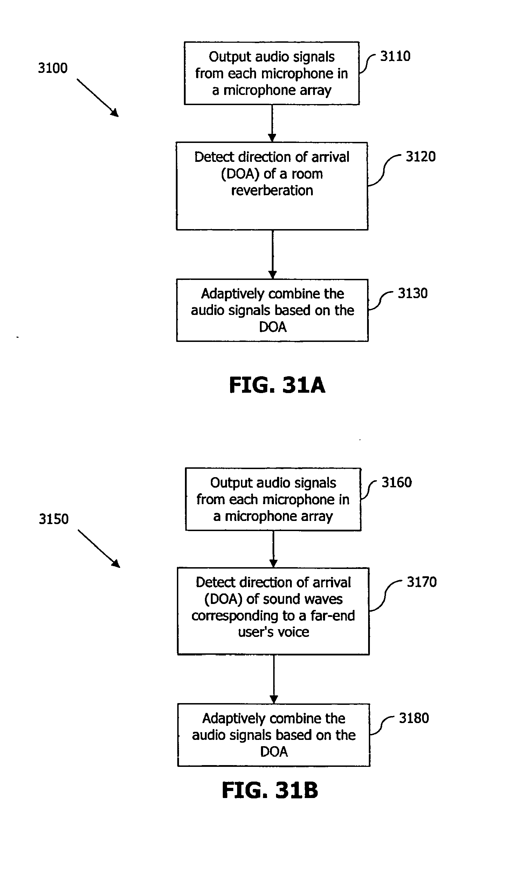

FIG. 31A is a flowchart 3100 illustrating a method for reducing the effects of room reverberation in a telephone used in a speaker-phone mode. Flowchart 3100 begins at a step 3110 in which each microphone in a microphone array outputs an audio signal based on a sound wave incident thereon. For example, the microphone array can be similar to microphone array 2910. The sound waves incident on the microphone array can include sound waves corresponding to a reverberation of a near-end user's voice.

In a step 3120, the DOA of the sound waves corresponding to the reverberation of the near-end user's voice is detected. The DOA can be detected based on the audio signals output by the microphones in the microphone array. For example, a DSP similar to DSP 2925 of FIG. 29 can detect the DOA in a similar manner to that described above.

In a step 3130, the audio signals are adaptively combined to reduce the effects of room reverberation when the telephone is used in speaker-phone mode. For example, the audio signals can be adaptively combined by, e.g., DSP 2925. In an example, step 3130 includes adaptively combining the audio signals based on the DOA to effectively steer a minimum sensitivity angle of the microphone array so that a source of the reverberation of the near-end user's voice is within the minimum sensitivity angle.

An acoustic echo can be reduced in a similar manner to that described above. For example, FIG. 31B is a flowchart 3150 illustrating a method for reducing the effects of an acoustic in a telephone used in a speaker-phone mode. Flowchart 3150 begins at a step 3160 that is similar to step 3110 of FIG. 31A. However, in the example of FIG. 31B, the sound waves incident on the microphone array can include sound waves corresponding to a far-end user's voice. For example, the far-end user's voice can be output by a loudspeaker on the telephone when it is used in a speaker-phone mode.

In a step 3170, the DOA of the sound waves corresponding to the far-end user's voice is detected in a similar manner to that described above.

In a step 3180, the audio signals are adaptively combined to reduce the effects of acoustic echo due to the far-end user's voice being picked-up by the microphones of the near-end telephone. For example, the audio signals can be adaptively combined by, e.g., DSP 2925. In an example, step 3180 includes adaptively combining the audio signals based on the DOA to effectively steer a minimum sensitivity angle of the microphone array so that a source of the sound waves corresponding to the far-end user's voice is within the minimum sensitivity angle. As mentioned above, the source of the far-end user's voice can be a loudspeaker of the near-end telephone or it could be an object that reflects sound waves.

XII. Conclusion

The specifications and the drawings used in the foregoing description were meant for exemplary purposes only, and not limitation. It is intended that the full scope and spirit of the present invention be determined by the claims that follow.

**Claims**

1. A telephone that provides improved echo cancellation performance, comprising:

   a receiver that receives a far-end audio signal comprising a voice component of a far-end user;
   a loudspeaker that converts the far-end audio signal into sound waves;
   a first microphone that picks up the sound waves and outputs a first audio signal, the first audio signal including a first voice component associated with the voice of a near-end user and a second voice component associated with the voice of the far-end user;
   a second microphone that outputs a second audio signal;
   a voice activity detector (VAD) that processes the first audio signal, the second audio signal and the far-end audio signal to generate output relating to at least one of (i) time intervals in which the first voice component is present in the first audio signal and (ii) time intervals in which the second voice component is present in the first audio signal; and
   an echo canceller that cancels the second voice component included in the first audio signal based on the output from the VAD, thereby producing a third audio signal.

2. The telephone of claim 1, wherein the VAD processes the first audio signal, the second audio signal and the far-end audio signal to generate output relating to time intervals in which the first voice component is present in the first audio signal, wherein the processing of the first and second audio signals is based in part on detecting a power ratio between the first and second audio signals.

3. The telephone of claim 1, wherein the echo canceller comprises:

   an adaptive filter that adaptively filters the far-end audio signal based on the output from the VAD to produce an adaptively filtered signal; and

a subtraction unit that subtracts the adaptively filtered signal from the first audio signal, thereby producing the third audio signal.

4. The telephone of claim 1, wherein the echo canceller comprises:

an adaptive filter that adaptively filters the second audio signal based on the output from the VAD to produce an adaptively filtered signal; and
a subtraction unit that subtracts the adaptively filtered signal from the first audio signal, thereby producing the third audio signal.

5. A telephone that provides improved performance, comprising:

a microphone array, each microphone in the array configured to receive sound waves and to generate an audio signal corresponding thereto; and
a digital signal processor (DSP) that receives the audio signals from the microphone array and is configured to detect a direction of arrival (DOA) of at least one of (i) sound waves corresponding to a reverberation of a voice of a near-end user and (ii) sound waves corresponding to a voice signal of a far-end user, wherein the DSP adaptively combines the audio signals from the microphone array based on the DOA to produce a first audio output signal.

6. The telephone of claim 5,
wherein the DSP is further configured to adaptively combine the audio signals from the microphone array based on the DOA of sound waves corresponding to the reverberation of the voice of the near-end user to effectively steer a minimum sensitivity angle of the microphone array, wherein the minimum sensitivity angle is defined as an angle within which a sensitivity of the microphone array is below a threshold.

7. A method for processing audio signals in a telephone having at least two microphones, comprising:

receiving a far-end audio signal comprising a voice component of a far-end user;
converting the far-end audio signal into sound waves;
picking up the sound waves and outputting a first audio signal from the first microphone, the first audio signal including a first voice component associated with the voice of a near-end user and a second voice component associated with the voice of the far-end user;
outputting a second audio signal from a second microphone;
processing the first audio signal, the second audio signal and the far-end audio signal in a voice activity detector (VAD) to generate output relating to at least one of (i) time intervals in which the first voice component is present in the first audio signal and (ii) time intervals in which the second voice component is present in the first audio signal; and
canceling the second voice component included in the first audio signal based on the output of the VAD, thereby producing a third audio signal.

8. The method of claim 7, wherein processing the first audio signal and the second audio signal comprises:

detecting a power ratio between the first and second audio signals.

9. The method of claim 7, wherein canceling the second voice component included in the first audio signal based on the output of the VAD comprises:

adaptively filtering the far-end audio signal based on the output from the VAD to produce an adaptively filtered signal; and
subtracting the adaptively filtered signal from the first audio signal, thereby producing the third audio signal.

10. A method for processing audio signals in a telephone having a microphone array, comprising:

(a) outputting an audio signal from each microphone in the microphone array based on sound waves incident thereon;
(b) detecting a direction of arrival (DOA) of at least one of (i) sound waves corresponding to a reverberation of a near-end user's voice and (ii) sound waves corresponding to a far-end user's voice; and

(c) adaptively combining the audio signals based on the DOA to produce a first audio output signal.

EP 1 727 344 A2

100

109  101          102            104          105           106              107    108

○──→ A/D ──→ NOISE          ──→ SPEECH   ──→ CHANNEL   ──→ MODULATOR ──→ RF ──▽
             SUPPRESSOR         ENCODER      ENCODER

                         ↓                ↑
                    VOICE ACTIVITY
103 ──          DETECTOR

## FIG.1A

FIG.1B

FIG.2

FIG.3

FIG.4

500

```
┌─────────────────────────────────────────┐
│  OUTPUT A FIRST AUDIO SIGNAL FROM THE FIRST │
│   MICROPHONE, THE FIRST AUDIO SIGNAL       │      510
│   COMPRISING A VOICE COMPONENT AND A       │
│     BACKGROUND NOISE COMPONENT             │
└─────────────────────────────────────────┘
                    │
                    ▼
┌─────────────────────────────────────────┐
│   OUTPUT A SECOND AUDIO SIGNAL FROM THE    │      520
│         SECOND MICROPHONE                  │
└─────────────────────────────────────────┘
                    │
                    ▼
┌─────────────────────────────────────────┐
│   INCREASE A RATIO OF THE VOICE COMPONENT  │
│   TO THE NOISE COMPONENT OF THE FIRST AUDIO│
│ SIGNAL BASED ON THE CONTENT OF AT LEAST ONE│      530
│  OF THE FIRST AUDIO SIGNAL AND THE SECOND  │
│    AUDIO SIGNAL TO PRODUCE A THIRD AUDIO   │
│                SIGNAL                      │
└─────────────────────────────────────────┘
```

FIG.5

FIG.6

700

```
┌─────────────────────────────────────────┐
│   OUTPUT A FIRST AUDIO SIGNAL FROM THE FIRST   │
│   MICROPHONE, THE FIRST AUDIO SIGNAL          │
│   COMPRISING A VOICE COMPONENT AND A          │──── 710
│   BACKGROUND NOISE COMPONENT                  │
└─────────────────────────────────────────┘
                    │
                    ▼
┌─────────────────────────────────────────┐
│   OUTPUT A SECOND AUDIO SIGNAL FROM THE       │
│   SECOND MICROPHONE                           │──── 720
└─────────────────────────────────────────┘
                    │
                    ▼
┌─────────────────────────────────────────┐
│        CANCEL AT LEAST A PORTION OF THE        │
│   BACKGROUND NOISE COMPONENT OF THE FIRST     │
│   AUDIO SIGNAL BASED ON THE CONTENT OF THE    │
│   SECOND AUDIO SIGNAL TO PRODUCE A THIRD      │──── 730
│              AUDIO SIGNAL                      │
└─────────────────────────────────────────┘
```

FIG.7

FIG.8

EP 1 727 344 A2

410

A/D

902

605

ADAPTIVE
FILTER

901

412

A/D

FIG.9

FIG.10

1100

OUTPUT A FIRST AUDIO SIGNAL FROM THE FIRST
MICROPHONE, THE FIRST AUDIO SIGNAL
COMPRISING A VOICE COMPONENT AND A
BACKGROUND NOISE COMPONENT
— 1110

OUTPUT A SECOND AUDIO SIGNAL FROM THE
SECOND MICROPHONE
— 1120

SUPPRESS AT LEAST A PORTION OF THE
BACKGROUND NOISE COMPONENT OF THE FIRST
AUDIO SIGNAL BASED ON THE CONTENT OF THE
FIRST AUDIO SIGNAL AND THE SECOND AUDIO
SIGNAL TO PRODUCE A THIRD AUDIO SIGNAL
— 1130

FIG.11

FIG.12A

FIG.12B

FIG.13

1400

| OUTPUT A FIRST AUDIO SIGNAL FROM THE FIRST MICROPHONE, THE FIRST AUDIO SIGNAL COMPRISING A VOICE COMPONENT AND A BACKGROUND NOISE COMPONENT | 1410 |

| OUTPUT A SECOND AUDIO SIGNAL FROM THE SECOND MICROPHONE | 1420 |

| DETECT TIME INTERVALS IN WHICH THE VOICE COMPONENT IS PRESENT IN THE FIRST AUDIO SIGNAL BASED ON THE CONTENT OF THE FIRST AUDIO SIGNAL AND THE SECOND AUDIO SIGNAL | 1430 |

FIG.14

FIG.15

FIG.18

FIG.17

FIG.16

FIG.19

FIG.20

EP 1 727 344 A2

FIG.21

EP 1 727 344 A2

(a) $L/\lambda=0.5$

FIG.22A

(b) $L/\lambda=1$

FIG.22B

(c) $L/\lambda=2$

FIG.22C

(d) $L/\lambda=4$

FIG.22D

$[D(f,\phi)]$

FAR−FIELD RESPONSE

NEAR−FIELD RESPONSE

$\phi$ (DEGREES)    FIG.22E

$[D(f,\phi)]$

STEERED
BEAM
PATTERN

UNSTEERED
BEAM
PATTERN

0   20   40   60   80   100   120   140   160   180

$\phi$ (DEGREES)

FIG.23

FIG.24

EP 1 727 344 A2

FIG.25

2500

2510

2550

2520

2550 A

2550 B

**FIG.26**

EP 1 727 344 A2

FIG.27

**FIG. 28**

EP 1 727 344 A2

**FIG. 29**

EP 1 727 344 A2

3000

Output a first
audio signal — 3010

↓

Output a second
audio signal — 3020

↓

Process the two
audio signals in a
voice activity
detector (VAD) — 3030

↓

Cancel an echo in
the first audio
signal resulting in a
third audio signal — 3040

↓

Transmit the third
audio signal — 3050

# FIG. 30

3100

Output audio signals
from each microphone in
a microphone array — 3110

Detect direction of arrival
(DOA) of a room
reverberation — 3120

Adaptively combine the
audio signals based on the
DOA — 3130

## FIG. 31A

3150

Output audio signals
from each microphone in
a microphone array — 3160

Detect direction of arrival
(DOA) of sound waves
corresponding to a far-end
user's voice — 3170

Adaptively combine the
audio signals based on the
DOA — 3180

## FIG. 31B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 21530405 A, Chen
- US 13549105 A, Chen
- US 06513105 A, Chen
- US 01892104 A, Chen
- US 96830004 A, Thyssen